# EUROPEAN PATENT SPECIFICATION

(11) **EP 4 642 627 B1**
(45) Date of publication and mention of the grant of the patent: **04.02.2026**
(21) Application number: 24706694.7
(22) Date of filing: 19.02.2024
(51) Int. Cl.: B29D 11/00

(54) **METHOD OF MANUFACTURING A COATED SPECTACLE LENS COMPRISING STRUCTURES**
VERFAHREN ZUR HERSTELLUNG EINES BESCHICHTETEN BRILLENGLASES MIT STRUKTUREN
PROCÉDÉ DE FABRICATION D'UN VERRE DE LUNETTES REVÊTU COMPRENANT DES STRUCTURES

(30) Priority: 17.02.2023 EP 23157412
(43) Date of publication of application: 05.11.2025
(73) Proprietor: Carl Zeiss Vision International GmbH, 73430 Aalen (DE)
(72) Inventor: LIU, Yujing, 73430 Aalen (DE); SHARIFI, Hamed, 73430 Aalen (DE); KARIM, Waiz, 73430 Aalen (DE); SCHMID, Silvia, 73430 Aalen (DE); SCHURR, Robin, 73430 Aalen (DE)
(74) Representative: Carl Zeiss AG - Patentabteilung
(86) International application number: PCT/EP2024/054181
(87) International publication number: WO 2024/170797

(56) References cited:
- WO-A2-2021/236687
- US-A1- 2020 361 165
- US-A1- 2023 036 893

## Description

### Field of the invention

The present invention relates to a method being configured for designing a digital twin of a coated spectacle lens by means of a computer.

### Related prior art

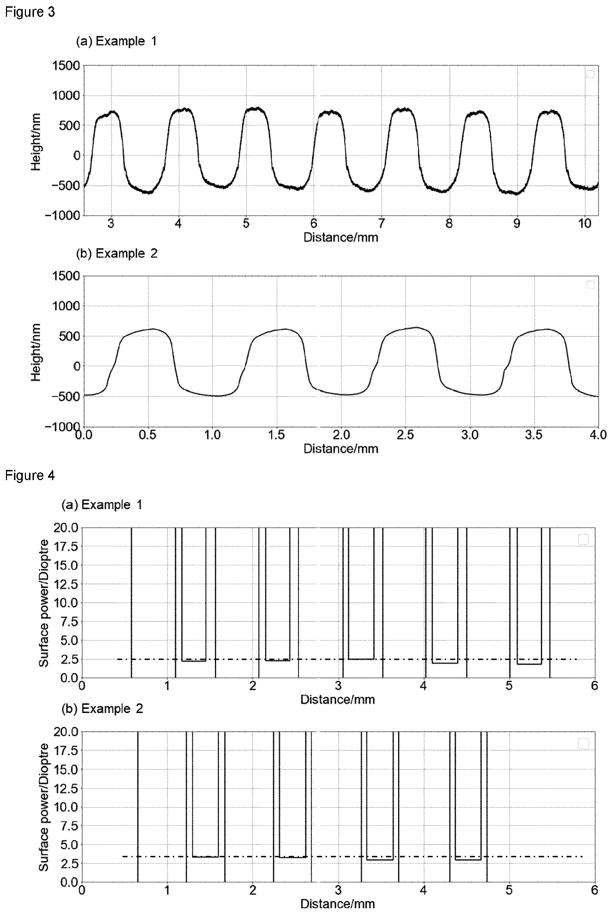

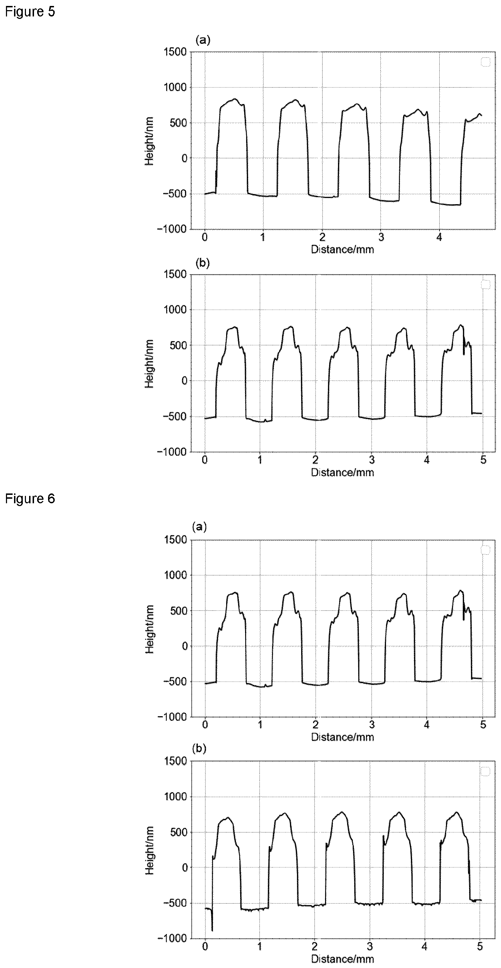

WO 2020/180817 A1 discloses a method for exposing an ophthalmic lens at discrete locations to laser radiation to yield in lenslets or light scattering centers. The lenslets can have a diameter of 0.5 mm or more up to 5 mm. The optical power of the lenslets may be zero or they may have an add power of +0.25 D or more up to +5.0 D compared to the base power of the lens. The scattering centers can have a dimension in the x-y plane in a range from about 0.001 mm or more to about 1 mm or less. With reference to figures 3A to 3D, a layer of a sacrificial material is deposited on a lens surface in a thickness sufficiently thin to be readily removed by exposure to laser radiation, thereby forming pits in the lens surface. A deposit material fills the pits and may form a layer on the remaining sacrificial material. The filled pits can provide a light scattering effect, a lensing effect or reduce light transmission. Finally, the deposit material remaining on the layer of sacrificial material is removed from the lens surface. With reference to figures 5A to 5C, laser radiation is used to locally reshape a material deposited on a lens surface into lenslets, for example by locally melting the material. The remaining material may be removed, leaving behind the lenslets only. With reference to figures 6A to 6C, laser radiation is used to form a lenslet in a lens surface by locally melting a portion of the lens surface and reshaping that portion to a lenslet.

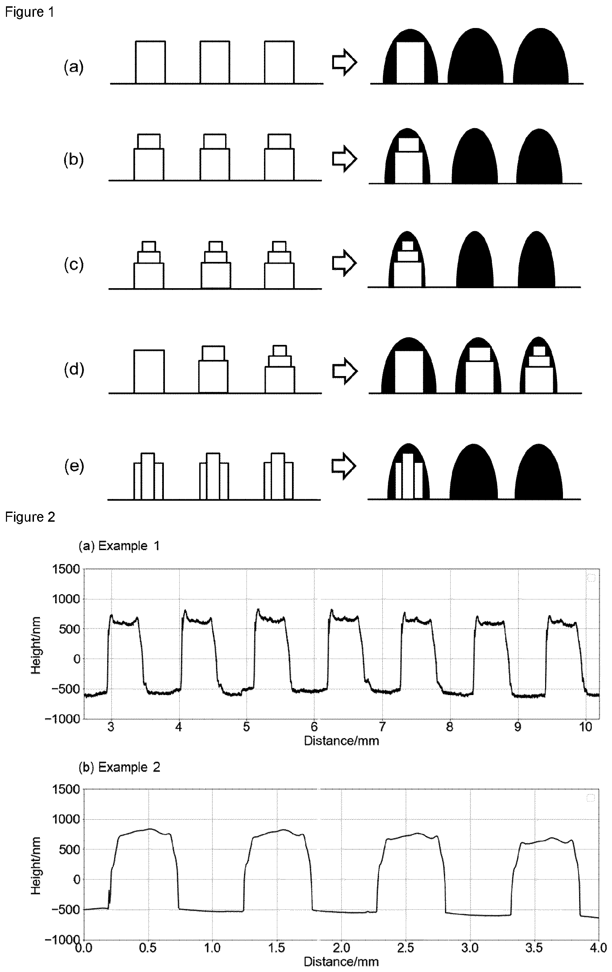

WO 2022/251713 A1 discloses a method for forming optical elements at a surface of an ophthalmic lens using a different absorption of a same laser radiation wavelength. With reference to figures 1A to 1C, a laser radiation locally absorbed by a laser interaction layer on a surface of a lens substrate forms discrete optical elements at the surface of the lens substrate, for example, by melting the laser interaction layer where exposed. With reference to figure 4, a laser interaction layer applied to a lens surface facilitates formation of optical elements in the bulk material of the lens substrate at the surface thereof without changing the surface shape, for example, by locally heating the bulk material of the lens substrate to a temperature at which an index of refraction of the bulk material changes to form an optical element. With reference to figure 5, a laser interaction layer alternatively may be incorporated into the bulk material of the lens substrate at the lens surface.

WO 2021/236687 A2 discloses a method for forming optical elements on an ophthalmic lens according to a pattern. Material can be deposited on a surface of the lens to form the optical elements, or the lens can be exposed to radiation which modifies the surface and/or bulk of the lens to form the optical elements. Additional coatings can be applied to one or both surface either before or after the application of the pattern. The optical elements can be formed on the lens by UV LED Direct-to Substrate Printing, pad printing, hot stamping, screen printing, transfer or lithographic printing.

WO 2020/261213 A1 discloses an ophthalmic lens comprising a base lens and one or more light modulating cell zones comprising a plurality of light modulating cells. A light modulating cell may be generated by a laser in a subtractive or localized lens material change process.

US 2017/0131567 A1 discloses a spectacle lens having a first refraction area based on a prescription of correcting the refraction of an eye and second refraction areas having a refractive power different from the first refractive power and having a function of focusing an image on a position other than a retina of the eye. The second refraction areas are formed as a plurality of island-shaped areas on a surface of a spectacle lens, arranged as shown in figure 1 or figure 10, as hexagon within a circular area of a radius of 20 mm or less with an optical centre as a centre of the spectacle lens. In figure 1, the island-shaped areas are not arranged in a circular area of a radius of 2.5 to 10.0 mm with the optical centre as the centre of the spectacle lens. An island-shaped area has a refractive power larger than the refractive power of the first refraction area by 2.00 D to 5.00 D. Each surface of the island-shaped areas has an area of about 0.50 to 3.14 mm² and has a circular shape of a diameter of about 0.8 to 2.0 mm. The island-shaped areas are separated from each other by a distance almost equal to a value of a radius of diameter/2.

WO 2019/166659 A1 discloses a spectacle lens comprising a plurality of contiguous optical elements, arranged as shown in figure 1, figure 10 or figure 12. The optical elements have a contour shape being inscribable in a circle having a diameter greater than or equal to 0.8 mm and smaller than or equal to 3.0 mm. The contiguous optical elements arranged in at least two concentric rings have a same center. The distance between two concentric rings of contiguous optical elements varies between 2.0 mm and 5.0 mm. In an annular zone of the spectacle lens having an inner diameter greater than 9 mm and an outer diameter smaller than 57 mm, the ratio between the sum of areas of the contiguous optical elements located inside said zone and the area of said zone is comprised between 20% and 70%. The contiguous optical elements are made by direct surfacing, molding, casting or injection, embossing, filming, or photolithography.

WO 2019/166659 A1 further discloses a spectacle lens comprising concentric rings, arranged as shown in figure 11b and described on page 20, lines 10 to 12.

CN 111103701 A discloses a spectacle lens comprising an annular cylindrical microstructure, arranged as shown in figure 1. The central optical area is circular having a radius of 5 mm to 10 mm, the center of the spectacle lens being the center of the circle. The annular cylindrical microstructure is located outside the central optical area having a radius between the one of the central optical area and 20 mm or more. The radial width of the annular cylindrical microstructures is 0.5 mm to 2 mm. The distance between the different cylindrical microstructure is 0.5 mm to 3 mm. The annular cylindrical microstructure is made by injection molding.

US 2023/036893 A1 discloses a method for manufacturing a coated spectacle lens.

WO/2023/155984 discloses a spectacle lens comprising ring-shaped focusing structures surrounding a central clear zone having a central clear zone width of 6 mm to 9.4 mm. The ring-shaped focusing structures have a width of equal to or lower than 0.7 mm.

### Problem to be solved

Based on WO 2020/180817 A1 the problem underlying the present invention is to provide a method for selectively structuring a surface of a spectacle lens without a need of a masking layer of sacrificial material or locally melting either a deposited material or a lens material.

Based on WO 2021/236687 A2, in particular page 15, lines 28 to 30, disclosing that optical elements are formed by inkjetting a curable material onto a surface of a blank ophthalmic lens and then curing the material to set the optical elements in the pattern and Figure 2, the problem underlying the present invention is to provide a method for selectively structuring a surface of a spectacle lens without a need of inkjetting the curable material only in a position to set the optical elements in the pattern.

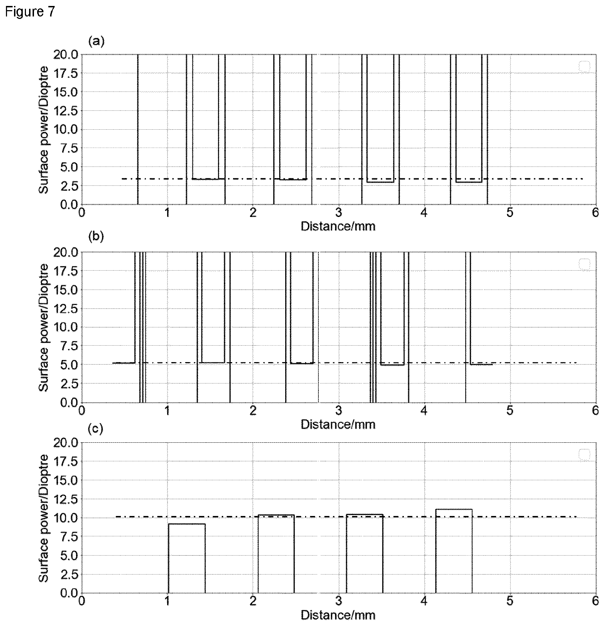

In particular, the problem underlying the present invention is to provide:
an alternative method for manufacturing a spectacle lens comprising lenslets arranged as described in WO 2020/180817 A1, and for example shown in figures 12B, 14, or 15 thereof, having the dimensions and the optical power as disclosed therein; an alternative method for manufacturing a spectacle lens comprising discrete optical elements arranged and having desired dimensions as described in WO 2022/251713A1; an alternative method for manufacturing a spectacle lens comprising lenslets having the add power and the size as described in WO 2021/236687 A2; an alternative method for manufacturing a spectacle lens comprising a plurality of light modulating cells arranged as described in WO 2020/261213 A1, and for example shown in figures 6a to 6l, 16 to 19, 22 to 34, 39 to 41, or 43 to 45 thereof, having the dimensions and power as disclosed therein; a concrete method for manufacturing a spectacle lens comprising a plurality of island-shaped areas arranged as described in US 2017/0131567 A1, and for example shown in figures 1 and 10 thereof, having the dimensions disclosed therein; an alternative method for manufacturing a spectacle lens comprising contiguous optical elements arranged as described in WO 2019/166659 A1, and for example shown in figures 1, 10 or 12 thereof, having the dimensions disclosed therein; an alternative method for manufacturing a spectacle lens comprising concentric rings arranged as described in WO 2019/166659 A1, and for example shown in figure 11 thereof; an alternative method for manufacturing a spectacle lens comprising an annular cylindrical microstructure arranged as described in CN 111103701 A, and for example shown in figure 1 thereof, having the dimensions disclosed therein; or a concrete method for manufacturing a spectacle lens comprising ring-shaped focusing structures arranged as described in WO/2023/155984, and for example shown in figures 1, 7, 8, 9 or 10 thereof, having the dimension disclosed therein.

### Summary of the invention

The present invention relates to a method according to claim 1, a computer according to claim 14, a computer program according to claim 15 and computer-readable storage medium according to claim 16.

A "digital twin of a coated spectacle lens" shall be defined analogously as in ISO 13666:2019(E), section 3.18.1 (coated lens), as a digital twin of a spectacle lens to which one surface layer or more surface layers have been added digitally to alter one property or more properties of the digital twin of the spectacle lens. The digital twin of the coated spectacle lens is for the purpose of a use of the digital twin for manufacturing the coated spectacle lens. The digital twin of the coated spectacle lens is a mathematical description of a lens surface of a front surface of the coated spectacle lens, i.e., the mathematical description of the front surface of the coated spectacle lens, a mathematical description of a lens surface of a back surface of the coated spectacle lens, i.e., the mathematical description of the back surface of the coated spectacle lens, said mathematical descriptions including a relative orientation of the lens surface of the front surface to the lens surface of the back surface, i.e., said mathematical descriptions including the relative orientation of the front surface to the back surface, and a refractive index of a digital twin of a spectacle lens. Said mathematical descriptions preferably are including the refractive index of said digital twin of said spectacle lens only. A refractive index of one surface layer or each surface layer of more surface layers digitally added to said digital twin of said spectacle lens preferably is assumed to be identical to the refractive index of said digital twin of said spectacle lens. The refractive index of said digital twin of said spectacle lens preferably is a uniform refractive index.

The front surface of said digital twin of the coated spectacle lens preferably comprises (i) one structure or (ii) a plurality of structures. The back surface of the digital twin of the coated spectacle lens optionally comprises (i) one structure or (ii) a plurality of structures. The front surface of said digital twin of said coated spectacle lens is defined analogously as in ISO 13666:2019(E), section 3.2.13, as a surface which when said digital twin is transferred to the coated spectacle lens is intended to be fitted away from the eye. The back surface of said digital twin of said coated spectacle lens is defined analogously as in ISO 13666:2019(E), section 3.2.14, as a surface which when said digital twin is transferred to the coated spectacle lens is intended to be fitted nearer to the eye. Said digital twin is transferred to the coated spectacle lens, i.e., said digital twin is transferred to physical reality, by manufacturing said coated spectacle lens, as described in detail below.

The digital twin of the coated spectacle lens is a mathematical description or a mathematical representation of the lens surfaces of the coated spectacle lens including a relative orientation of the lens surfaces to each other and the refractive index of the digital twin of the spectacle lens, said mathematical description or said mathematical representation being computer-readable data or in the form of computer-readable data, said computer-readable data being for the purpose of a use for manufacturing the coated spectacle lens. Said computer-readable data may (i) be stored on a computer-readable storage medium, (ii) embodied in a data signal or (iii) transferred via a data signal. The computer-readable storage medium may be a non-transitory tangible computer-readable storage medium. Said computer-readable data may additionally contain manufacturing instructions for transferring said digital twin of said coated spectacle lens to physical reality, i.e., for manufacturing the coated spectacle lens.

The digital twin of the coated spectacle lens may, for the purpose of a use of the digital twin for manufacturing the coated spectacle lens, additionally or alternatively, be one of the following:
- an analytical description or an analytical model describing or representing said coated spectacle lens. Said analytical description or said analytical model is for the purpose of a use for manufacturing said coated spectacle lens. Said analytical description or said analytical model preferably is a piecewise representation and comprises (a) a mathematical formula describing a lens surface of a front surface of said coated spectacle lens, i.e., the mathematical formula describing the front surface of said coated spectacle lens, preferably the mathematical formula describing the lens surface of the front surface not considering said (i) one structure or said (ii) plurality of structures; (b) a mathematical formula describing a lens surface of a back surface of said coated spectacle lens, i.e. the mathematical formula describing the back surface of said coated spectacle lens, preferably the mathematical formula describing the lens surface of the back surface not considering said (i) one structure or said (ii) plurality of structures; (c)(i) a piecewise mathematical formula describing said one structure, in particular a surface, preferably as could be seen in the examples given below in the sense of surface shape, form or topography, a position and a domain of said one structure or (c)(ii) piecewise mathematical formulas describing each structure of said plurality of structures, in particular a surface, preferably as could be seen in the examples given below in the sense of surface shape, form or topography, a position and a domain of each structure of said plurality of structures; (d) a mathematical formula describing a relative orientation of the lens surface of the front surface to the lens surface of the back surface, i.e., the mathematical formula describing the relative orientation of the front surface to the back surface; and (e) a mathematical formula describing a refractive index of a digital twin of a spectacle lens. Alternatively, said analytical description or said analytical model is a piecewise representation and comprises (a) a mathematical formula or mathematical formulas describing a lens surface of the front surface considering optionally said (i) one structure or (ii) each structure of said plurality of structures, preferably the mathematical formula(s) describing the lens surface of the front surface inclusive the (i) one structure or (ii) each structure of the plurality of structures; (b) a mathematical formula or mathematical formulas describing a lens surface of a back surface considering optionally said (i) one structure or (ii) each structure of said plurality of structures, preferably the mathematical formula describing the lens surface of the back surface; (c) a mathematical formula describing the relative orientation of the lens surface of the front surface to the lens surface of the back surface; and (d) a mathematical formula describing the refractive index of the digital twin of the spectacle lens;

- an analytical description or an analytical model describing or representing said coated spectacle lens, said analytical description or said analytical model additionally containing manufacturing instructions, preferably manufacturing instructions considering laser process parameters to achieve said (i) one predefined structure or said (ii) plurality of predefined structures;
- in the form of an analytical description or an analytical model representing said coated spectacle lens, said analytical description or said analytical model being for the purpose of a use for manufacturing said coated spectacle lens;
- in the form of an analytical description or an analytical model representing said coated spectacle lens, said analytical description or said analytical model additionally containing manufacturing instructions, preferably manufacturing instructions considering laser process parameters to achieve said (i) one predefined structure or said (ii) plurality of predefined structures;
- said analytical description or said analytical model being (i) computer-readable data or (ii) in the form of computer-readable data, said computer-readable data being for the purpose of a use for manufacturing said coated spectacle lens;
- said analytical description or said analytical model being (i) computer-readable data or (ii) in the form of computer-readable data, said computer-readable data additionally containing manufacturing instructions, preferably manufacturing instructions considering laser process parameters to achieve said (i) one predefined structure or said (ii) plurality of predefined structures;
- said analytical description or said analytical model being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium;
- numerical data describing or representing said coated spectacle lens. Said numerical data are for the purpose of a use for manufacturing said coated spectacle lens. Said numerical data preferably are comprising or being a conversion of said analytical description or said analytical model. Said numerical data preferably comprises discrete x,y,z positions of or on the front surface of said digital twin of said coated spectacle lens and discrete x,y,z positions of or on the back surface of said digital twin of said coated spectacle lens. A pattern comprising discrete x,y positions may be adapted or selected arbitrarily. Preferably, said pattern comprising discrete x,y positions is adapted or selected to consider a beam diameter as defined in ISO 11145:2018(E), section 3.3, in particular a beam diameter dᵤ(z) as defined in ISO 11145:2018(E), section 3.3.1, of a laser. Said numerical data comprises the function value z of the analytical description or the analytical model of a respective lens surface in each of said discrete x,y positions. A relative orientation of discrete x,y positions of the lens surface of the front surface, i.e., discrete x,y positions of the front surface, and discrete x,y positions of the lens surface of the back surface, i.e., discrete x,y positions of the back surface, to each other is comprised in said numerical data. The function value z in each discrete x,y position, i.e., the discrete x,y,z positions, of the front and back surface are described in the same coordinate system or a relative orientation of the coordinate systems of the front surface and the back surface is comprised in said numerical data. A refractive index of the digital twin of the spectacle lens is comprised in said numerical data;
- numerical data describing or representing said coated spectacle lens, said numerical data additionally containing manufacturing instructions, preferably manufacturing instructions considering laser process parameters to achieve said (i) one predefined structure or said (ii) plurality of predefined structures;
- in the form of numerical data describing or representing said coated spectacle lens, said numerical data being for the purpose of a use for manufacturing said coated spectacle lens;
- in the form of numerical data describing or representing said coated spectacle lens, said numerical data additionally containing manufacturing instructions, preferably manufacturing instructions considering laser process parameters to achieve said (i) one predefined structure or said (ii) plurality of predefined structures;
- said numerical data being (i) computer-readable data or (ii) in the form of computer-readable data, said computer-readable data being for the purpose of a use for manufacturing said coated spectacle lens;
- said numerical data being (i) computer-readable data or (ii) in the form of computer-readable data, said computer-readable data additionally containing manufacturing instructions, preferably manufacturing instructions considering laser process parameters to achieve said (i) one predefined structure or said (ii) plurality of predefined structures;
- said numerical data being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium;
- computer-readable data describing or representing said coated spectacle lens, said computer-readable data being for the purpose of a use for manufacturing said coated spectacle lens;
- computer-readable data describing or representing said coated spectacle lens, said computer-readable data additionally containing manufacturing instructions, preferably manufacturing instructions considering laser process parameters to achieve said (i) one predefined structure or said (ii) plurality of predefined structures;
- in the form of computer-readable data describing or representing said coated spectacle lens, said computer-readable data being for the purpose of a use for manufacturing said coated spectacle lens;
- in the form of computer-readable data describing or representing said coated spectacle lens, said computer-readable data additionally containing manufacturing instructions, preferably manufacturing instructions considering laser process parameters to achieve said (i) one predefined structure or said (ii) plurality of predefined structures;
- said computer-readable data being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium;
- a virtual representation of said coated spectacle lens, said virtual representation being for the purpose of a use for manufacturing said coated spectacle lens;
- a virtual representation of said coated spectacle lens in the form of computer-readable data, said computer-readable data being for the purpose of a use for manufacturing said coated spectacle lens;
- a virtual representation of said coated spectacle lens in the form of computer-readable data, said computer-readable data additionally containing manufacturing instructions, preferably manufacturing instructions considering laser process parameters to achieve said (i) one predefined structure or said (ii) plurality of predefined structures;
- said virtual representation of said coated spectacle lens being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium;
- said virtual representation of said coated spectacle lens in the form of computer-readable data, said computer-readable data being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium.

A "coated spectacle lens" results from a transfer of a digital twin of a coated spectacle lens to physical reality. The digital twin of the coated spectacle lens is transferred to physical reality by manufacturing said coated spectacle lens. The coated spectacle lens is defined as in ISO 13666:2019(E), section 3.18.1 (coated lens), as a spectacle lens (3.5.2) to which one surface layer or more surface layers has/have been added to alter one property or more properties of the spectacle lens. A spectacle lens is as defined in ISO 13666:2019(E), section 3.5.2, an ophthalmic lens (3.5.1) worn in front of, but not in contact with, the eyeball. A front surface of the coated spectacle lens shall be defined analogously as in ISO 13666:2019(E), section 3.2.13, as surface of the coated spectacle lens intended to be fitted away from the eye. A back surface of a coated spectacle lens shall be defined analogously as in ISO 13666:2019(E), section 3.2.14, as surface of the coated spectacle lens intended to be fitted nearer to the eye.

A "digital twin of a spectacle lens" shall be defined analogously as in ISO 13666:2019(E), section 3.5.2 (spectacle lens), as a digital twin of an ophthalmic lens worn, when transferred to physical reality, in front of, but not in contact with, the eyeball. The digital twin of the spectacle lens is for the purpose of a use of the digital twin for manufacturing the spectacle lens. The digital twin of a spectacle lens is a mathematical description of a front surface of the spectacle lens, a mathematical description of a back surface of the spectacle lens, said mathematical descriptions including a relative orientation of the front surface and the back surface and a refractive index of an optical material between the front surface and the back surface. A front surface of said digital twin of said spectacle lens is defined analogously as in ISO 13666:2019(E), section 3.2.13, as a surface which when said digital twin is transferred to physical reality is intended to be fitted away from the eye. A back surface of said digital twin of said spectacle lens is defined analogously as in ISO 13666:2019(E), section 3.2.14, as a surface which when said digital twin is transferred to physical reality is intended to be fitted nearer to the eye. The digital twin of said spectacle lens is transferred to physical reality by manufacturing said spectacle lens. The refractive index of the optical material included in the mathematical descriptions preferably is a uniform refractive index. The refractive index of the optical material included in the mathematical descriptions preferably is the refractive index the spectacle lens has when the digital twin of the spectacle lens has been transferred to physical reality.

The digital twin of the spectacle lens may, for the purpose of a use of the digital twin for manufacturing the spectacle lens and, after addition of one surface layer or more surface layers, the coated spectacle lens, additionally or alternatively, be one of the following:
- an analytical description or an analytical model describing or representing said spectacle lens. Said analytical description or said analytical model is for the purpose of a use for manufacturing said spectacle lens. Said analytical description or said analytical model preferably is a piecewise representation and comprises (a) a mathematical formula describing a lens surface of a front surface of said spectacle lens, i.e., the mathematical formula describing the front surface of said spectacle lens, (b) a mathematical formula describing a lens surface of a back surface of said spectacle lens, i.e., the mathematical formula describing the back surface of said spectacle lens, and (c) a mathematical formula describing a refractive index of an optical material;
- an analytical description or an analytical model describing or representing said spectacle lens, said analytical description or said analytical model additionally containing manufacturing instructions, preferably for obtaining final optical surfaces of said spectacle lens;
- in the form of an analytical description or an analytical model representing said spectacle lens, said analytical description or said analytical model being for the purpose of a use for manufacturing said spectacle lens;
- in the form of an analytical description or an analytical model representing said spectacle lens, said analytical description or said analytical model additionally containing manufacturing instructions, preferably for obtaining final optical surfaces of said spectacle lens;
- said analytical description or said analytical model being (i) computer-readable data or (ii) in the form of computer-readable data, said computer-readable data being for the purpose of a use for manufacturing said spectacle lens;
- said analytical description or said analytical model being (i) computer-readable data or (ii) in the form of computer-readable data, said computer-readable data additionally containing manufacturing instructions, preferably for obtaining final optical surfaces;
- said analytical description or said analytical model being for the purpose of a use for manufacturing said spectacle lens and being (i) stored on a computer-readable storage medium, (ii) embodied in a data signal or (iii) transferred via a data signal. The computer readable storage medium may be a non-transitory tangible computer-readable storage medium;
- numerical data describing or representing said spectacle lens. Said numerical data are for the purpose of a use for manufacturing said spectacle lens. Said numerical data preferably are comprising or being a conversion of said analytical description or said analytical model. Said numerical data preferably comprises a) discrete x,y,z positions of or on a front surface of said spectacle lens and b) discrete x,y,z positions of or on a back surface of said spectacle lens. A pattern comprising discrete x,y positions may be adapted or selected arbitrarily. Said numerical data comprises the function value z of the analytical description or the analytical model of said lens surface in each of said discrete x,y positions. The function value z in each discrete x,y position, i.e., the discrete x,y,z positions, of the front and back surface are described in the same coordinate system or a relative orientation of the coordinate systems of the lens front surface and the lens back surface is comprised in said numerical data. A refractive index of an optical material is comprised in said numerical data;
- numerical data describing or representing said spectacle lens, said numerical data additionally containing manufacturing instructions, preferably for obtaining final optical surfaces of said spectacle lens;
- in the form of numerical data describing or representing said spectacle lens, said numerical data being for the purpose of a use for manufacturing said spectacle lens;
- in the form of numerical data describing or representing said spectacle lens, said numerical data additionally containing manufacturing instructions, preferably for obtaining final optical surfaces of said spectacle lens;
- said numerical data being (i) computer-readable data or (ii) in the form of computer-readable data, said computer-readable data being for the purpose of a use for manufacturing said spectacle lens;
- said numerical data being (i) computer-readable data or (ii) in the form of computer-readable data, said computer-readable data additionally containing manufacturing instructions, preferably for obtaining final optical surfaces of said spectacle lens;
- said numerical data being for the purpose of a use for manufacturing said coated spectacle lens and being (i) stored on a computer-readable storage medium, (ii) embodied in a data signal or (iii) transferred via a data signal. The computer-readable storage medium may be a non-transitory tangible computer-readable storage medium;
- computer-readable data describing or representing said spectacle lens, said computer-readable data being for the purpose of a use for manufacturing said spectacle lens;
- computer-readable data describing or representing said spectacle lens, said computer-readable data additionally containing manufacturing instructions, preferably for obtaining final optical surfaces of said spectacle lens;
- in the form of computer-readable data describing or representing said spectacle lens, said computer-readable data being for the purpose of a use for manufacturing said spectacle lens;
- in the form of computer-readable data describing or representing said spectacle lens, said computer-readable data additionally containing manufacturing instructions, preferably for obtaining final optical surfaces of said spectacle lens;
- said computer-readable data being for the purpose of a use for manufacturing said spectacle lens and being (i) stored on a computer-readable storage medium, (ii) embodied in a data signal or (iii) transferred via a data signal. The computer-readable storage medium may be a non-transitory tangible computer-readable storage medium;
- a virtual representation of said spectacle lens, said virtual representation being for the purpose of a use for manufacturing said spectacle lens;
- a virtual representation of said spectacle lens in the form of computer-readable data being for the purpose of a use for manufacturing said spectacle lens;
- a virtual representation of said spectacle lens in the form of computer-readable data, said computer-readable data additionally containing manufacturing instructions, preferably for obtaining final optical surfaces of said spectacle lens;
- said virtual representation of said spectacle lens being for the purpose of a use for manufacturing said spectacle lens and being (i) stored on a computer-readable storage medium, (ii) embodied in a data signal or (iii) transferred via a data signal. The computer-readable storage medium may be a non-transitory tangible computer-readable storage medium;
- said virtual representation of said spectacle lens in the form of computer-readable data being for the purpose of manufacturing said spectacle lens and being (i) stored on a computer-readable storage medium, (ii) embodied in a data signal or (iii) transferred via a data signal. The computer-readable storage medium may be a non-transitory tangible computer-readable storage medium.

A "spectacle lens" results from a transfer of a digital twin of a spectacle lens to physical reality. The digital twin of the spectacle lens is transferred to physical reality by manufacturing the spectacle lens. The spectacle lens is as defined in ISO 13666:2019(E), section 3.5.2, an ophthalmic lens (3.5.1) worn in front of, but not in contact with, the eyeball. A front surface of the spectacle lens is defined as in ISO 13666:2019(E), section 3.2.13, as surface of the spectacle lens intended to be fitted away from the eye. A back surface of the spectacle lens is defined as in ISO 13666:2019(E), section 3.2.14, as surface of the spectacle lens intended to be fitted nearer to the eye.

The spectacle lens preferably is a finished spectacle lens, the finished spectacle lens as defined in ISO 13666:2019(E), section 3.8.7 (finished lens), as lens (3.5.2) of which both sides have their final optical surface. The finished spectacle lens may be either an uncut spectacle lens as defined in ISO 13666:2019(E), section 3.8.8 (uncut lens) or an edged spectacle lens as defined in ISO 13666:2019(E), section 3.8.9 (edged lens). The spectacle lens preferably is selected from at least one of
- a single-vision spectacle lens as defined in ISO 13666:2019(E), section 3.7.1 (single-vision lens),
- a position-specific single-vision spectacle lens as defined in ISO 13666:2019(E), section 3.7.2 (position-specific single-vision lens),
- a multifocal spectacle lens as defined in ISO 13666: 2019(E), section 3.7.3 (multifocal lens),
- a bifocal spectacle lens as defined in ISO 13666:2019(E), section 3.7.4 (bifocal lens),
- a trifocal spectacle lens as defined in ISO 13666:2019(E), section 3.7.5 (trifocal lens),
- a fused multifocal spectacle lens as defined in ISO 13666:2019(E), section 3.7.6 (fused multifocal lens),
- a power-variation spectacle lens as defined in ISO 13666:2019(E), section 3.7.7 (power-variation lens),
- a progressive-power spectacle lens as defined in ISO 13666:2019(E), section 3.7.8 (progressive-power lens).

Preferably, the spectacle lens is the single-vision spectacle lens or the position-specific single-vision spectacle lens.

The spectacle lens may be a blank as defined in ISO 13666:2019(E), section 3.8.1. One surface layer or more surface layers forming or causing (i) one structure or (ii) a plurality of structures may be on an optically finished surface the blank. The other surface of the blank may be transferred to an optically finished surface afterwards.

The spectacle lens comprises or is based on an optical material. The optical material is as defined in ISO 13666:2019(E), section 3.3.1, a transparent material capable of being manufactured into optical components. The optical material preferably comprises a thermosetting hard resin as defined in ISO 13666:2019(E), section 3.3.3, or a thermoplastic hard resin as defined in ISO 13666:2019(E), section 3.3.4. The optical material preferably is having a uniform refractive index.

A "structure of a digital twin of a coated spectacle lens" is a mathematical description of a surface of the structure, said mathematical description not considering a mathematical description of a lens surface of the digital twin of the coated spectacle lens comprising the structure, for example not considering a mathematical description of a front surface comprising the structure. The structure of the digital twin of the coated spectacle lens is a single structure of said digital twin.

For characterizing the structure and not the lens surface of the digital twin of the coated spectacle lens comprising the structure, the mathematical description of the lens surface comprising the structure is a separate mathematical description from the mathematical description of the surface of the structure itself. The surface of the structure and the lens surface of the digital twin of the coated spectacle lens comprising the structure are mathematically described piecewise.

The surface of the structure of the digital twin of the coated spectacle lens may be selected from at least one of the following surfaces or may be pieced together from parts selected from at least one of the following surfaces:
- a spherical surface as defined in ISO 13666:2019(E), section 3.4.1;
- a part of a spherical surface;
- a cylindrical surface as defined in ISO 13666:2019(E), section 3.4.2;
- a part of a cylindrical surface;
- an aspherical surface as defined in ISO 13666:2019(E), section 3.4.3;
- a part of an aspherical surface;
- a toroidal surface as defined in ISO 13666:2019(E), section 3.4.6;
- a part of a toroidal surface;
- an atoroidal surface as defined in ISO 13666:2019(E), section 3.4.7;
- a part of an atoroidal surface;
- a power-variation surface defined analogously as in ISO 13666:2019(E), section 3.4.10;
- a part of a power-variation surface.

The structure of the digital twin of the coated spectacle lens preferably is
- a domain on a lens surface of said digital twin, said domain being part of one surface layer or more surface layers digitally added to a front surface and/or a back surface of a digital twin of a spectacle lens, preferably said one or more surface layer(s) digitally added to the front surface of the digital twin of the spectacle lens, or
- a domain of a lens surface of said digital twin, said domain being caused by one surface layer or more surface layers digitally added to a front surface and/or a back surface of a digital twin of a spectacle lens, preferably said one or more surface layer(s) digitally added to the front surface of the digital twin of the spectacle lens.

The structure of the digital twin of the coated spectacle lens being the domain on the lens surface preferably is an elevation, preferably single elevation, which is part of one surface layer or more surface layers digitally added to the front surface and/or the back surface of the digital twin of the spectacle lens, preferably said one or more surface layer(s) digitally added to the front surface of the digital twin of the spectacle lens. The structure of the digital twin of the coated spectacle lens preferably is part of said one or more surface layer(s) digitally added to the front surface and/or the back surface of the digital twin of the spectacle lens when the structure is elevated with respect to the one or more surface layer(s).

The structure of the digital twin of the coated spectacle lens being the domain of the lens surface preferably is a depression, preferably single depression, which is caused by one surface layer or more surface layers digitally added to the front surface and/or the back surface of the digital twin of the spectacle lens, preferably said one or more surface layer(s) digitally added to the front surface of the digital twin of the spectacle lens. The structure of the digital twin of the coated spectacle lens preferably is caused by said one or more surface layer(s) digitally added to the front surface and/or the back surface of the digital twin of the spectacle lens when said one or more surface layer(s) is/are elevated with respect to the structure.

The surface of said domain, irrespective of whether being the elevation or the depression, is a piecewise mathematical description of the digital twin of the coated spectacle lens.

The domain of the structure on or of a lens surface is smaller than the lens surface of the digital twin of the coated spectacle lens comprising the structure.

The structure of the digital twin of the coated spectacle lens has a surface power which is different to a surface power of the lens surface of the digital twin of the coated spectacle lens comprising the structure outside a domain occupied by the structure. The surface power of the structure shall be defined analogously as in ISO 13666:2019(E), section 3.10.4 (surface power), as a local ability of the surface of the structure to change the calculated vergence of a digitally represented bundle of rays incident at the surface of the structure. The surface power of the structure preferably is analogously as in note 1 to the entry in ISO 13666:2019(E), section 3.10.4, determined from a radius or radii of the surface of the structure and a refractive index of a material of the structure, and is calculated for digitally represented light incident or emergent in air. The refractive index may be an actual refractive index of a material of the structure or a nominal value. The refractive index of the material of the structure preferably is assumed to be a same as a refractive index of an optical material of a digital twin of a spectacle lens. Preferably, the refractive index of the material of the structure is assumed to be the same as the refractive index of the optical material of the digital twin of the spectacle lens, irrespective of whether the structure a) is part of one or more surface layer(s) digitally added to a lens surface of the digital twin of the spectacle lens or b) is caused by said one or more surface layer(s). The surface power of a lens surface of the digital twin of the coated spectacle lens shall be defined analogously as in ISO 13666:2019(E), section 3.10.4 (surface power), as a local ability of the lens surface of a digital twin of a spectacle lens to change the calculated vergence of a digitally represented bundle of rays incident at the lens surface. The surface power of the lens surface is analogously as in note 1 to the entry in ISO 13666:2019(E), section 3.10.4, determined from a radius or radii of the lens surface of the digital twin of the spectacle lens and a refractive index of an optical material of the digital twin of the spectacle lens, and is calculated for digitally represented light incident or emergent in air. The refractive index may be an actual refractive index of the optical material of the digital twin of the spectacle lens or a nominal value. The surface power of the lens surface of the digital twin of the spectacle lens is assumed to be a same as the surface power of the lens surface of the digital twin of the coated spectacle lens not considering the structure and not considering one or more surface layer(s) digitally added to the lens surface of the digital twin of the spectacle lens.

A "predefined" structure of a digital twin of a coated spectacle lens is a structure of said digital twin as defined before, for which, with respect to a lens surface of said digital twin comprising the structure, at least one of the group consisting of
- a surface of the structure, preferably in the sense of surface shape, form or topography, preferably selected or pieced together from the above exemplarily mentioned ones,
- a surface power of the structure, defined analogously as in ISO 13666:2019(E), section 3.10.4 (surface power),
- a domain of the structure, preferably a domain on a lens surface occupied by the structure, and
- a position of the structure on the lens surface, preferably a discrete x,y,z position of the structure on the lens surface,
is/are preset. Preferably, the surface of the structure, the domain of the structure and the position of the structure with respect to the lens surface comprising the structure are preset.

A "structure of a coated spectacle lens" results from a transfer of the structure of the digital twin of the coated spectacle lens to physical reality, by manufacturing said coated spectacle lens. A "predefined" structure of the coated spectacle lens results from a transfer of the predefined structure of the digital twin of the coated spectacle lens to physical reality, by manufacturing said coated spectacle lens. The surface of the structure of the coated spectacle lens may be selected from at least one of the following surfaces or may be pieced together from parts selected from at least one of the following surfaces:
- a spherical surface as defined in ISO 13666:2019(E), section 3.4.1;
- a part of a spherical surface;
- a cylindrical surface as defined in ISO 13666:2019(E), section 3.4.2;
- a part of a cylindrical surface;
- an aspherical surface as defined in ISO 13666:2019(E), section 3.4.3;
- a part of an aspherical surface;
- a toroidal surface as defined in ISO 13666:2019(E), section 3.4.6;
- a part of a toroidal surface;
- an atoroidal surface as defined in ISO 13666:2019(E), section 3.4.7;
- a part of an atoroidal surface;
- a power-variation surface as defined in ISO 13666:2019(E), section 3.4.10;
- a part of a power-variation surface.

The structure of the coated spectacle lens preferably is
- a domain on a lens surface of said coated spectacle lens, said domain being part of one surface layer or more surface layers added to a front surface and/or a back surface of a spectacle lens, preferably said one or more surface layer(s) added to the front surface of the spectacle lens, or
- a domain on a lens surface of said coated spectacle lens, said domain being part of one surface layer or more surface layers added to a front surface and/or a back surface of a spectacle lens, preferably said one or more surface layer(s) added to the front surface of the spectacle lens.

The structure of the coated spectacle lens being the domain on the lens surface preferably is an elevation, preferably a single elevation, which is part of one surface layer or more surface layers added to the front surface and/or the back surface of the spectacle lens, preferably said one or more surface layer(s) added to the front surface of the spectacle lens. The structure of the coated spectacle lens preferably is part of said one or more surface layer(s) added to the front surface and/or the back surface of the spectacle lens when the structure is elevated with respect to the one or more surface layer(s).

The structure of the coated spectacle lens being the domain of the lens surface preferably is a depression, preferably single depression, which is caused by one surface layer or more surface layers added to the front surface and/or the back surface of the spectacle lens, preferably said one or more surface layer(s) added to the front surface of the spectacle lens. The structure of the coated spectacle lens preferably is caused by said one or more surface layer(s) added to the front surface and/or the back surface of the spectacle lens when said one or more surface layer(s) is/are elevated with respect to the structure.

The domain of the structure on or of a lens surface is smaller than the lens surface of the coated spectacle lens comprising the structure. Preferably, a smallest lateral expansion of the domain of the structure on or of the lens surface corresponds to a beam diameter as defined in ISO 11145:2018(E), section 3.3, in particular a beam diameter dᵤ(z) as defined in ISO 11145:2018(E), section 3.3.1, of a laser. For example, a domain on or of the lens surface having a diameter of 70 mm obtainable by a laser having a beam diameter dᵤ(z) of 25 µm accounts for 0.035% of said diameter.

The structure of the coated spectacle lens has a surface power which is different to a surface power of the lens surface of the coated spectacle lens comprising the structure outside a domain occupied by the structure. The surface power of the structure is defined as in ISO 13666:2019(E), section 3.10.4 (surface power), as a local ability of a surface of the structure to change the vergence of a bundle of rays incident at the surface. The surface power of the structure preferably is as in note 1 to the entry in ISO 13666:2019(E), section 3.10.4, determined from a radius or radii of the surface of the structure and a refractive index (3.1.5) of a material of the structure, and is calculated for light (3.1.2) incident or emergent in air. The refractive index may be an actual refractive index of the material of the structure or a nominal value. The refractive index of the material of the structure preferably is assumed to be a same as a refractive index of an optical material of a spectacle lens. Preferably, the refractive index of the material of the structure is assumed to be the same as the refractive index of the optical material of the spectacle lens, irrespective of whether the structure a) is part of one or more surface layer(s) added to a lens surface of the spectacle lens or b) is caused by said one or more surface layer(s).

The surface power of a lens surface of the coated spectacle lens is defined as in ISO 13666:2019(E), section 3.10.4, as a local ability of a finished surface of a spectacle lens to change the vergence of a bundle of rays incident at the finished surface. The surface power of the lens surface is as in note 1 to the entry in ISO 13666:2019(E), section 3.10.4, determined from a radius or radii of the finished surface of the spectacle lens and a refractive index (3.1.5) of an optical material (3.3.1) of the spectacle lens, and is calculated for light (3.1.2) incident or emergent in air. The refractive index may be an actual refractive index of the optical material or a nominal value. The surface power of the finished surface of the spectacle lens is assumed to be a same as the surface power of the lens surface of the coated spectacle lens not considering the structure and not considering one or more surface layer(s) added to the finished surface of the spectacle lens.

Examples for a structure of a coated spectacle lens are:
- a lenslet as disclosed in WO 2020/180817 A1 having a diameter of 0.5 mm or more up to 5 mm, or a lenslet having an add power of +0.25 D or more up to 5.0 D or an add power of -0.25 D or less, each compared to the base optical power of the lens;
- an optical element as disclosed in WO 2022/251713 A1 having a desired shape and size;
- a lenslet as disclosed in WO 2021/236687 A1 having an add power of +0.25 D or more up to +5.0 D or an add power of -0,25 D or less, each compared to the base optical power of the lens, or a lenslet having a diameter of 0.5 mm or more up to 5 mm;
- a light modulating cell as disclosed in WO 2020/261213 A1 having a dimension and power as disclosed therein, for example in [00108], [00118], [00121], or [00122];
- a single island-shaped area as disclosed in US 2017/0131567 A1 having an area of about 0.50 to 3.14 mm² and a circular shape of a diameter of about 0.8 to 2.0 mm;
- a single optical element as disclosed in WO 2019/166659 A1 having a contour shape that is inscribable in a circle having a diameter greater than or equal to 0.8 mm and smaller than or equal to 3.0 mm;
- a single one of the concentric rings as disclosed in WO 2019/166659 A1, figure 11b;
- a single cylindrical microstructure as disclosed in CN 111103701 A having a radial width of 0.5 mm to 2 mm;
- a single ring-shaped focusing structure as disclosed in WO/2023/155984 having a width of equal or lower than 0.7 mm,
a respective structure being a single elevation, which is part of one surface layer or more surface layers added to the front surface and/or the back surface of the spectacle lens, or a respective structure being a single depression, which is caused by one surface layer or more surface layers added to the front surface and/or the back surface of the spectacle lens.

A "domain of one structure on a lens surface of a digital twin of a coated spectacle lens" or a "domain of one structure on a lens surface of a coated spectacle lens" each shall define that a domain of one structure shall be limited by an onset line. Said onset line passes along each onset of said one structure. An onset of said one structure shall represent, preferably along a circumference or along a perimeter of said one structure, a first position in which a surface, preferably in the sense of surface shape, form, or topography, of said one structure deviates from a surface of a lens surface comprising said one structure. A domain of one structure preferably is limited by one onset line only if within said domain a surface of said one structure deviates in each discrete x,y,z position from a surface of a lens surface comprising said one structure, preferably outside said domain occupied by said one structure. Examples for one structure occupying a domain on a lens surface limited by one onset line only are a lenslet as described in WO 2020/180817 A1 or a single island-shaped area as described in US 2017/0131567 A1.

A domain of one structure may be limited by an outer onset line and an inner onset line. Said outer onset line passes along each outer onset of said one structure. Said inner onset line passes along each inner onset of a same one structure. An outer onset shall represent, preferably along a circumference or along a perimeter of said one structure, a first outer position in which a surface, preferably in the sense of surface shape, form, or topography, of said one structure deviates from a surface of a lens surface comprising said one structure. Said inner onset shall represent, preferably along a structure-free domain of a lens surface surrounded or encircled by said same one structure, a first inner position in which a surface, preferably in the sense of surface shape, form, or topography, of said same one structure deviates from a lens surface comprising said same one structure. A domain of one structure preferably is limited by an outer onset line and an inner onset line if within said domain a surface of said one structure is not deviating in each discrete x,y,z position from a surface of a lens surface comprising said structure, preferably outside said domain occupied by said one structure. One exemplary structure occupying a domain on a lens surface limited by one outer onset line and only one inner onset line is a simple ring-shaped structure, said ring-shaped structure surrounding or encircling a structure-free domain of a lens surface and being surrounded or encircled by a structure-free domain of said lens surface. One structure shall be considered as "ring-shaped" if it surrounds at least one structure-free domain of a lens surface and there is at least one path within the one structure which runs from at least one starting point within the one structure around a structure-free domain of a lens surface and to the same at least one starting point again. Ring-shaped may comprise circular, elliptical or otherwise curved rings encircling a structure-free domain of a lens surface and being encircled by a structure-free domain of said lens surface. A structure-free domain of a ring-shaped structure is a domain of the spectacle lens or of the lens surface outside a respective domain occupied by said ring-shaped structure encircled or surrounded by said ring-shaped structure. A structure-free domain of the spectacle lens is a domain of the spectacle lens or of the lens surface outside a respective domain occupied by said ring-shaped structure. Examples for one structure occupying a domain on a lens surface limited by one outer onset line and one inner onset line are a single one of the concentric rings as described in WO 2019/166659 A1, figure 11b, a single cylindrical microstructure as disclosed in CN 111103701 A or a single ring-shaped focusing structure as disclosed in WO/2023/155984.

A "domain of a plurality of structures on a lens surface of a digital twin of a coated spectacle lens" or a "domain of a plurality of structures on a lens surface of a coated spectacle lens" each shall define that each structure of said plurality of structures shall be limited by an onset line. Said onset line passes along each onset of each structure of said plurality of structures. An onset of each structure of said plurality of structures shall represent, preferably along a circumference or along a perimeter of each structure, a first position in which a surface, preferably in the sense of surface shape, form, or topography, of each structure deviates from a surface of a lens surface comprising said structure of said plurality of structures. A domain of each structure preferably is limited by one onset line only if within said domain a surface of each structure deviates in each discrete x,y,z position from a surface of a lens surface comprising said structure of said plurality of structures, preferably outside each domain occupied by each structure of said plurality of structures. Examples for a plurality of structures each occupying a domain on a lens surface each limited by one onset line only are lenslets as described in WO 2020/180817 A1 or single island-shaped areas as described in US 2017/0131567 A1.

A domain of each structure of a plurality of structures, i.e., each domain of a same structure of said plurality of structures, may be limited by an outer onset line and an inner onset line. Said outer onset line passes along each outer onset of each structure of said plurality of structures. Said inner onset line passes along each inner onset of a same structure of said plurality of structures. An outer onset shall represent, preferably along a circumference or along a perimeter of each structure of said plurality of structures, a first outer position in which a surface, preferably in the sense of surface shape, form, or topography, of each structure deviates from a surface of a lens surface comprising said structure of said plurality of structures. Said inner onset shall represent, preferably along a structure-free domain of a lens surface surrounded or encircled by a same structure of said plurality of structures, a first inner position in which a surface, preferably in the sense of surface shape, form, or topography, of said same structure deviates from a lens surface comprising said same structure of said plurality of structures. A domain of each structure of said plurality of structures, i.e., each domain of the same structure of said plurality of structures, preferably is limited by an outer onset line and an inner onset line if within said domain a surface of each structure, i.e., each same structure, is not deviating in each discrete x,y,z position from a surface of a lens surface comprising said structure of said plurality of structures, preferably outside each domain occupied by each structure of said plurality of structures. Exemplary structures occupying a domain on a lens surface limited by one outer onset line and only one inner onset line are a plurality of simple ring-shaped structures, each ring-shaped structure surrounding or encircling one structure-free domain of a lens surface and being surrounded or encircled by a structure-free domain of said lens surface. Each structure of said plurality of structures shall be considered as "ring-shaped" if it surrounds at least one structure-free domain of a lens surface and there is at least one path within each structure which runs from at least one starting point within each structure around said at least one structure-free domain of the lens surface and to the same at least one starting point again. Ring-shaped may comprise circular, elliptical or otherwise curved rings encircling a structure-free domain of a lens surface and being encircled by a structure-free domain of said lens surface. Examples for a plurality of structures each occupying a domain on a lens surface limited by an outer onset line and one inner onset line are concentric rings as described in WO 2019/166659 A1, figure 11b, cylindrical microstructures as disclosed in CN 111103701 A or ring-shaped focusing structures as disclosed in WO/2023/155984.

A "plurality of structures of a digital twin of a coated spectacle lens" is a mathematical description of a surface of each structure, each mathematical description not considering a mathematical description of a lens surface of the digital twin of the coated spectacle lens comprising the plurality of structures. The plurality of structures of the digital twin of the coated spectacle lens is more than one structure, the structure of the digital twin of the coated spectacle lens as defined before. In case the digital twin of the coated spectacle lens comprises for example two structures, one structure may be formed as elevation on one lens surface of said digital twin, e.g., the front surface, and one structure may be formed as a) elevation on the other lens surface of said digital twin, e.g., the back surface, as b) elevation on the same lens surface of said digital twin, i.e., the front surface, as c) depression on the other lens surface of said digital twin, or as d) depression on the same lens surface of said digital twin. In the plurality of structures each structure may be an identical type of structure, e.g., a plurality of only one structure of the exemplarily mentioned before. An identical type of structure may comprise an identical surface and is either of an identical dimension or of a different dimension. Alternatively, the plurality of structures may comprise different types of structures, selected for example from any one of the exemplarily mentioned before. In the plurality of structures, the structures may adjoin each other or may be distanced from each other. Alternatively, a first part of the plurality of structures may adjoin each other and a second part of the plurality of structures may be distanced from each other.

In the plurality of structures, a surface power of each structure is different to a surface power of a lens surface comprising said plurality of structures outside each domain occupied by each structure of said plurality of structures. In the plurality of structures each structure of said plurality of structures may be responsible for a same value in surface power difference. In the plurality of structures, at least one structure of said plurality of structures may be responsible for a value in surface power difference which is different to other values in surface power difference caused by other structures of said plurality of structures.

A "predefined" plurality of structures of a digital twin of a coated spectacle lens is more than one structure of said digital twin, the structure as defined before, for which, with respect to a lens surface of said digital twin comprising the plurality of structures, at least one of the group consisting of
- a surface of each structure, surface preferably in the sense of surface shape, form, or topography, preferably selected or pieced together from the above exemplarily mentioned ones,
- a surface power of each structure, defined analogously as in ISO 13666:2019(E), section 3.10.4 (surface power),
- a domain of each structure, preferably a domain on a lens surface occupied by each structure,
- a position of each structure on the lens surface, preferably each discrete x,y,z position of each structure on the lens surface,
is/are preset. Preferably, the surface of each structure, the domain of each structure and the position of each structure with respect to the lens surface comprising the respective structure are preset.

A "plurality of structures of a coated spectacle lens" results from a transfer of the structures of a digital twin of a coated spectacle lens to physical reality, by manufacturing said coated spectacle lens. A "predefined" plurality of structures of the coated spectacle lens results from a transfer of the predefined structures of a digital twin of the coated spectacle lens to physical reality, by manufacturing said coated spectacle lens. The plurality of structures of the coated spectacle lens is more than one structure, the structure of the coated spectacle lens as defined before. In case the coated spectacle lens comprises for example two structures, one structure may be formed as elevation on one lens surface of said coated spectacle lens, e.g., the front surface, and one structure may be formed as a) elevation on the other lens surface of said coated spectacle lens, e.g., the back surface, as b) elevation on the same lens surface, i.e., the front surface, as c) depression on the other lens surface of said coated spectacle lens, or as d) depression on the same lens surface of said coated spectacle lens. In the plurality of structures each structure may be an identical type of structure, e.g., a plurality of only one type of structure of the exemplarily mentioned before. An identical type of structure may comprise an identical surface and is either of an identical dimension or of a different dimension. Alternatively, the plurality of structures may comprise different types of structures, selected for example from any one of the exemplarily mentioned before. In the plurality of structures, the structures may adjoin each other or may be distanced from each other. Alternatively, a first part of the plurality of structures may adjoin each other and a second part of the plurality of structures may be distanced from each other.

In the plurality of structures, a surface power of each structure is different to a surface power of a lens surface comprising said plurality of structures outside each domain occupied by each structure of said plurality of structures. In the plurality of structures each structure of said plurality of structures may be responsible for a same value in surface power difference. In the plurality of structures, at least one structure of said plurality of structures may be responsible for a value in surface power difference which is different to other values in surface power difference caused by other structures of said plurality of structures.

Examples for the plurality of structures of the coated spectacle lens are:
- a plurality of the lenslets disclosed in WO 2020/180817 A1, each having a diameter of 0.5 mm or more up to 5 mm, or a lenslet having an add power of +0.25 D or more up to 5.0 D or an add power of -0.25 D or less, each compared to the based optical power of the lens;
- a plurality of optical elements as disclosed in WO 2022/251713 A1, each having a desired shape and size;
- a plurality of the lenslets disclosed in in WO 2021/236687 A1, each having an add power of +0.25 D or more up to +5.0 D or an add power of -0,25 D or less, each compared to the base optical power of the lens, or each having a diameter of 0.5 mm or more up to 5 mm;
- a plurality of the light modulating cells disclosed in WO 2020/261213 A1, each having a dimension and power as disclosed therein, for example in [00108], [00118], [00121], or [00122];
- a plurality of the island-shaped areas disclosed in US 2017/0131567 A1, each having an area of about 0.50 to 3.14 mm², a circular shape of a diameter of about 0.8 to 2.0 mm and a distance between said island-shaped areas of equal to a value of a radius of diameter/2;
- a plurality of the optical elements disclosed in WO 2019/166659 A1, each having a contour shape that is inscribable in a circle having a diameter greater than or equal to 0.8 mm and smaller than or equal to 3.0 mm, the more than one optical elements may be arranged contiguously as defined on page 15, line 27 to page 16, line 8 of WO 2019/166659 A1 or non-contiguously;
- a plurality of the concentric rings disclosed in WO 2019/166659 A1, figure 11b, the concentric rings arranged spaced apart from each other;
- a plurality of the cylindrical microstructures disclosed in CN 111103701 A, each having a radial width of 0.5 mm to 2 mm, a distance between the different cylindrical microstructures is 0.5 mm to 3 mm;
- a plurality of the ring-shaped focusing structures disclosed in WO/2023/155984, each having a width of equal or lower than 0.7 mm and a spectacle lens comprising said more than one ring-shaped focusing structure is characterized by a surface-based fill factor defined as a surface area ratio of the surface area of an innermost of said ring-shaped focusing structures and a sum of said surface area of said innermost ring-shaped focusing structures and an area of a peripheral clear zone being larger than 17 % and equal or lower than 70 % for said width in a range of 0.6 mm to 0.7 mm,
a structure of the plurality of structures being an elevation, which is part of one surface layer or more surface layers added to the front surface and/or the back surface of the spectacle lens, or a structure of the plurality of structures being a depression, which is caused by one surface layer or more surface layers added to the front surface and/or the back surface of the spectacle lens.

The before mentioned examples for the plurality of structures of the coated spectacle lens may be positioned with respect to a lens surface comprising the plurality of structures as described in the respective before mentioned citation.

A "lens surface of a digital twin of a coated spectacle lens" is a mathematical description of a front surface of the digital twin of the coated spectacle lens or a mathematical description of a back surface of the digital twin of the coated spectacle lens. The mathematical description of the front surface and the mathematical description of the back surface are piecewise mathematical descriptions, not considering a piecewise mathematical description of a structure or of each structure of a plurality of structures. The lens surface of the front surface and/or the lens surface of the back surface of the digital twin of the coated spectacle lens each is as defined in ISO 13666:2019(E), section 3.4 or is defined analogously as in ISO 13666:2019(E), section 3.4. The lens surface may be formed as one of the following:
- as a spherical surface as defined in ISO 13666:2019(E), section 3.4.1,
- as a cylindrical surface as defined in ISO 13666:2019(E), section 3.4.2,
- as an aspherical surface as defined in ISO 13666:2019(E), section 3.4.3,
- as a toroidal surface as defined in ISO 13666:2019(E), section 3.4.6,
- as an atoroidal surface as defined in ISO 13666:2019(E), section 3.4.7,
- as a power-variation surface defined analogously as in ISO 13666:2019(E), section 3.4.10.

The lens surface of the front surface and the lens surface of the back surface of the digital twin of the coated spectacle lens may be formed of a same lens surface or of a different lens surface.

A "lens surface of a coated spectacle lens" results from a transfer of a lens surface of a digital twin of the coated spectacle lens to physical reality, by manufacturing the coated spectacle lens. The lens surface of the front surface and/or the lens surface of the back surface of the coated spectacle lens each is as defined in ISO 13666:2019(E), section 3.4 and may be formed as one of the following:
- as a spherical surface as defined in ISO 13666:2019(E), section 3.4.1,
- as a cylindrical surface as defined in ISO 13666:2019(E), section 3.4.2,
- as an aspherical surface as defined in ISO 13666:2019(E), section 3.4.3,
- as a toroidal surface as defined in ISO 13666:2019(E), section 3.4.6,
- as an atoroidal surface as defined in ISO 13666:2019(E), section 3.4.7,
- as a power-variation surface as defined in ISO 13666:2019(E), section 3.4.10.

A "lens surface of a digital twin of a spectacle lens" is a mathematical description of a front surface of the digital twin of the spectacle lens or a mathematical description of a back surface of the digital twin of the spectacle lens. The lens surface of the front surface and the lens surface of the back surface may be formed of a same lens surface or of a different lens surface. The lens surface of the front surface and the lens surface of the back surface of the digital twin of the spectacle lens preferably is of a same lens surface as a respective lens surface of a digital twin of a coated spectacle lens. The lens surface of the digital twin of the coated spectacle lens has been described before. Any differences in the lens surfaces of the digital twin of the spectacle lens and the respective lens surface of a digital twin of the coated spectacle lens preferably shall be neglected.

A "lens surface of a spectacle lens" results from a transfer of a lens surface of a digital twin of the spectacle lens in physical reality, by manufacturing the spectacle lens. The lens surface of the spectacle lens is assumed to be a same as the respective lens surface of a coated spectacle lens. One or more surface layers added to a lens surface of the spectacle lens shall be neglected.

"Determining" laser process parameters means to preset or predefine the laser process parameters to transfer (i) one predefined structure or (ii) a plurality of predefined structures of a digital twin of a coated spectacle lens in physical reality. Said (i) one predefined structure or (ii) said plurality of predefined structures of said digital twin of said coated spectacle lens is/are transferred to physical reality by manufacturing said coated spectacle lens. The laser process parameters are preset or predefined to achieve said coated spectacle lens comprising (i) one structure or (ii) a plurality of structures corresponding to said (i) one predefined structure or said (ii) plurality of predefined structures of said digital twin of said coated spectacle lens. Preferably, the laser process parameters are preset or predefined to achieve a coated spectacle lens comprising on a front surface and/or on a back surface, preferably on the front surface, one or more surface layer(s) comprising, preferably said one or more surface layer(s) forming or causing, (i) one structure or (ii) a plurality of structures corresponding to said (i) one predefined structure or said (ii) plurality of structures of said digital twin of said coated spectacle lens.

Determining laser process parameter preferably means to preset or predefine the laser process parameters and their respective settings to transfer (i) one predefined structure or (ii) a plurality of predefined structures of a digital twin of a coated spectacle lens to physical reality, as described before. The laser process parameters and their respective settings are preset or predefined to achieve said coated spectacle lens comprising (i) one structure or (ii) a plurality of structures corresponding to said (i) one predefined structure or said (ii) plurality of predefined structures of said digital twin of said coated spectacle lens.

The preset or predefined laser process parameters may comprise a predetermined set of laser process parameters whose types of laser process parameters may be varied to achieve a coated spectacle lens comprising (i) one structure or (ii) a plurality of structures corresponding to (i) one predefined structure or (ii) a plurality of predefined structures of a respective digital twin of the coated spectacle lens. The preset or predefined laser process parameters may comprise a predetermined set of laser process parameters whose respective settings may be varied to achieve a coated spectacle lens comprising (i) one structure or (ii) a plurality of structures corresponding to (i) one predefined structure or (ii) a plurality of predefined structures of a respective digital twin of the coated spectacle lens.

The preset or predefined laser process parameters may comprise one predetermined set of laser process parameters whose types of laser process parameters and their respective settings are preset to achieve a coated spectacle lens comprising (i) one structure or each of (ii) a plurality of structures corresponding to (i) one predefined structure or to each of (ii) a plurality of predefined structures of a respective digital twin of the coated spectacle lens.

The preset or predefined laser process parameters may comprise more, preferably at least two, predetermined sets of laser process parameters whose types of laser process parameters and their respective settings are preset to achieve a coated spectacle lens comprising a same (i) one structure or a same structure out of a (ii) plurality of structures corresponding to a same (i) one predefined structure or a same predefined structure out of a (ii) plurality of predefined structures of a respective digital twin of the coated spectacle lens.

To achieve a "same" structure, irrespective of regarding one single structure or one structure out of a plurality of structures, means that one predetermined set or more predetermined sets of laser process parameters has/have to be determined to achieve a coated spectacle lens comprising said (i) one structure or said (ii) one structure out of a plurality of structures corresponding to (i) one predefined structure or one predefined structure out of (ii) a plurality of predefined structures of a respective digital twin of the coated spectacle lens.

Preferably, said (i) one predefined structure or said (ii) plurality of predefined structures is/are transferred to physical reality by at least the following manufacturing step:
- selectively curing a coating composition using laser radiation, the laser radiation as defined in ISO 11145:2018(E), section 3.19.4, or a laser beam, the laser beam as defined in ISO 11145:2018(E), section 3.19.5, by applying the determined laser process parameters, preferably selectively curing a coating composition on a front surface and/or on a back surface of a spectacle lens using laser radiation or a laser beam by applying the determined laser process parameters.

"Selectively curing" a coating composition means that the coating composition applied to a front surface and/or a back surface of a spectacle lens, preferably applied to fully cover said front surface and/or said back surface, is cured or precured in at least one of
- a preset position of said front surface,
- a preset position of said back surface,
- within a preset domain of said front surface,
- within a preset domain of said back surface.

Said coating composition is applied to "fully cover" said front surface and/or to "fully cover" said back surface of said spectacle lens when said coating composition completely covers said front surface and/or said back surface. Alternatively, applied to fully cover may comprise that said coating composition is applied to fully cover one domain or more domains of said front surface and/or said back surface, said domain(s) being selected to comprise (i) one structure or (ii) a plurality of structures of a resulting coated spectacle lens.

One predefined structure of a digital twin of a coated spectacle lens is "corresponding" to one structure of a coated spectacle lens when after transferring said digital twin to physical reality, i.e., when after manufacturing the coated spectacle lens at least one of a surface, a position, and a domain each of said one structure correspond to said one predefined structure. Said one structure of said coated spectacle lens is corresponding to said one structure of said digital twin of said coated spectacle lens when
- one surface layer of said coated spectacle lens is forming or causing said one structure, or
- more surface layers of said coated spectacle lens are forming or causing said one structure.

A plurality of predefined structures of a digital twin of a coated spectacle lens are "corresponding" to a plurality of structures of a coated spectacle lens when after transferring said digital twin to physical reality, i.e., when after manufacturing the coated spectacle lens at least one of each surface, each position, and each domain of each structure of said plurality of structures correspond to a respective predefined structure of said plurality of predefined structures. Said plurality of structures of said coated spectacle lens is corresponding to said plurality of predefined structures of said digital twin of said coated spectacle lens when
- one surface layer of said coated spectacle lens is forming or causing said plurality of structures, or
- more surface layers of said coated spectacle lens are forming or causing said plurality of structures.

"Laser process parameters" are parameters which are to be determined for at least one of the group consisting of:
- a laser, the laser as defined in ISO 11145:2018(E), section 3.19.1, the laser being either a continuous wave laser as defined in ISO 11145:2018(E), section 3.19.2, or a pulsed laser as defined in ISO 11145:2018(E), section 3.19.3;
- a laser device, the laser device as defined in ISO 11145:2018(E), section 3.19.6;
- a laser assembly, the laser assembly as defined in ISO 11145:2018(E), section 3.19.7; or
- a laser unit, the laser unit as defined in ISO 11145:2018(E), section 3.19.8.

With the choice of a type of the laser, the laser device, the laser assembly, or the laser unit, laser parameters and preferably each of their respective settings inherent to the respective type are preset. Laser parameters and their respective settings being inherent to the type of the laser, the laser device, the laser assembly, or the laser unit are for example selected from at least one of the group consisting of:
- a beam diameter as defined in ISO 11145:2018(E), section 3.3, in particular a beam diameter dᵤ(z) as defined in ISO 11145:2018(E), section 3.3.1, or a beam diameter d_{σ}(z) as defined in ISO 11145:2018(E), section 3.3.2;
- a beam radius as defined in ISO 11145:2018(E), section 3.4, in particular a beam radius wᵤ(z) as defined in ISO 11145:2018(E), section 3.4.1, or a beam radius w_{σ}(z)as defined in ISO 11145:2018(E), section 3.4.2;
- a beam width as defined in ISO 11145:2018(E), section 3.5, in particular a beam width d_{x,u}(z), d_{y,u}(z) as defined in ISO 11145:2018(E), section 3.5.1, or a beam width d_{σx}(z), d_{σy}(z) as defined in ISO 11145, section 3.5.2;
- a beam cross-sectional area as defined in ISO 11145:2018(E), section 3.6, in particular a beam cross-sectional area Aᵤ(z) as defined in ISO 11145:2018(E), section 3.6.1, or a beam cross-sectional area A_{σ}(z) as defined in ISO 11145:2018(E), section 3.6.2;
- a wavelength of laser radiation or of a laser beam.

Therefore, the method for designing a digital twin of a coated spectacle lens for the purpose of a use of the digital twin for manufacturing a coated spectacle lens preferably comprises the step of
- selecting laser parameters inherent to a type of at least one of the group selected from a laser, a laser device, a laser assembly, and a laser unit.

Preferably, selecting laser parameters inherent to the type of the laser, the laser device, the laser assembly, or the laser unit and preferably each of their respective settings considers at least one of the following:
- a domain of a structure to be achieved, in particular a smallest lateral expansion of the domain of the structure on or of a lens surface. Preferably said smallest lateral expansion corresponds to a beam diameter as defined in ISO 11145:2018(E), section 3.3, in particular a beam diameter dᵤ(z) as defined in ISO 11145:2018(E), section 3.3.1;
- an ability of a laser radiation to cure or precure a coating composition.

With the choice of the type of the laser, the laser device, the laser assembly, or the laser unit, laser process parameters not being inherent to the respective type are to be determined. Preferably, with the choice of the type of the laser, the laser device, the laser assembly, or the laser unit, preferably laser process parameters and their settings not being inherent to the respective type are to be determined. Laser process parameters not being inherent to the type of the laser, the laser device, the laser assembly, or the laser unit are for example selected from at least one of the group consisting of:
- a power and energy as defined in ISO 11145:2018(E), section 3.13, in particular at least one of an average energy density as defined in ISO 11145:2018(E), section 3.13.1, an average power density as defined in ISO 11145:2018(E), section 3.13.2, a pulse energy as defined in ISO 11145:2018(E), section 3.13.3, an energy density as defined in ISO 11145:2018(E), section 3.13.4, a continuous wave power as defined in ISO 11145:2018(E), section 3.13.5, a power density as defined in ISO 11145:2018(E), section 3.13.6, a pulse power as defined in 3.13.7, an average power as defined in ISO 11145:2018(E), section 3.13.8, and a peak power as defined in ISO 11145:2018(E), section 3.13.9;
- an efficiency as defined in ISO 11145:2018(E), section 3.20, in particular a laser efficiency as defined in ISO 11145:2018(E), section 3.20.1;
- a pulse duration as defined in ISO 11145:2018(E), section 3.14, in particular at least one of a pulse duration as defined in ISO 11145:2018(E), section 3.14.1; a full width half maximum (FWHM) pulse duration as defined in ISO 11145:2018(E), section 3.14.2, a pulse repetition rate as defined in ISO11145:2018(E), section 3.14.3;

- a scan speed which shall be defined as moving speed of a laser beam on a coated lens surface; the higher the scan speed, the less time the laser beam resides in a discrete x,y position of said coated lens surface, thus less power and energy is applied to said position;
- a repetition time which shall be defined as repeated times a laser beam comes across a discrete x,y position of a coated spectacle lens.

For determining the laser process parameters to achieve a coated spectacle lens comprising (i) one structure or (ii) a plurality of structures corresponding to (i) one predefined structure or (ii) a plurality of predefined structures of a respective digital twin of the coated spectacle lens, preferably numerical data comprising
- discrete x,y,z positions of or on a front surface of a digital twin of a coated spectacle lens, i.e., a discretization of the front surface, or
- discrete x,y,z positions of or on a back surface of a digital twin of a coated spectacle lens, i.e., a discretization of the back surface, or
- discrete x,y,z positions of or on a front surface of a digital twin of a coated spectacle lens and discrete x,y,z of or on a back surface of said digital twin, i.e., a discretization of the front surface and a discretization of the back surface,
is/are considered. Preferably, said discretization is adapted or selected to consider a beam diameter as defined in ISO 11145:2018(E), in particular a beam diameter dᵤ(z) as defined in ISO 11145:2018(E), section 3.3.1, of a laser.

Preferably, numerical data with respect to the front surface, with respect to the back surface or with respect to the front and back surface are considered, depending on the surface(s) of said digital twin of said coated spectacle lens to comprise (i) one predefined structure or (ii) a plurality of predefined structures.

Preferably, the discretization of the front surface, the discretization of the back surface or the discretization of the front and back surface is done to allow a determination of laser process parameters considering a lens surface of the front surface, and/or a lens surface of the back surface of the digital twin of the coated spectacle lens.

Preferably, the discretization of the front surface, the discretization of the back surface or the discretization of the front and back surface is done for a domain or in a domain of the respective surface. The discretization for a domain or in a domain means that not a complete lens surface of the front surface or a complete lens surface of the back surface is discretized but only the lens surface of or in said domain. A digital twin of a coated spectacle lens comprising one predefined structure comprises said one predefined structure in said domain. A digital twin of a coated spectacle lens comprising a plurality of predefined structures comprises a) a plurality of said domains, each comprising one predefined structure or b) one said domain comprising a plurality of structures. The discretization for a domain or in a domain allows a determination of laser process parameters considering a lens surface of or in said domain.

Determining laser process parameters "based on curing characteristics of a coating composition" means that the laser process parameters are determined such that one coating compositions is or more coating compositions are cured or precured by using laser radiation or a laser beam. Preferably, determining laser process parameters based on curing characteristics of a coating composition means that the laser process parameters are determined such as to selectively cure one coating composition or more coating compositions by using laser radiation or a laser beam. Curing, precuring or selectively curing one coating composition or curing, precuring or selectively curing coating compositions result in one surface layer or more surface layers of a coated spectacle lens forming or causing (i) one structure or (ii) a plurality of structures corresponding to (i) one predefined structure or (ii) a plurality of predefined structures of a digital twin of said coated spectacle lens. The curing characteristics of said coating composition or said coating compositions are dependent from for example chemical components comprised in said coating composition or a layer thickness in which said coating composition is applied to a front surface and/or a back surface of a spectacle lens.

Said coating composition or said coating compositions whose curing characteristics are considered when determining said laser process parameters preferably are applied to a lens surface of a spectacle lens by spin coating or dip coating.

In contrast to WO 2020/180817 A1, in particular page 2, lines 10 to 12, describing an exposure of an ophthalmic lens at discrete locations to laser radiation to shape a material at the surface; or page 2, lines 18 to 24, describing an exposure to laser radiation to locally reshape the material; or page 3, lines 6 to 7, page 13, lines 18 to 25, and figure 5B, describing to locally melt the material; laser process parameters are determined considering curing characteristics of a coating composition, i.e., the laser process parameters are determined such that an uncured coating composition or uncured coating compositions is/are cured or precured when applying laser radiation or a laser beam with the determined laser process parameters to said uncured coating composition(s). The laser process parameters are not determined to shape or reshape by for example locally melting a cured coating composition, i.e., a surface layer, or a precured coating composition.

In contrast to WO 2022/251713 A1, in particular page 7, [0034], the laser process parameters are determined such as to cure or precure an uncured coating composition or uncured coating compositions and not to melt a laser interaction layer, to cause the laser interaction layer and/or the lens material to foam or cavitate, to result in a colour change or to be removed by ablation.

In contrast to WO 2020/261213 A1, in particular page 15/16, [00108], the laser process parameters are determined such as to cure or precure an uncured coating composition or uncured coating compositions and not to form a light modulating cell by a laser in a subtractive or localized lens material change process.

In contrast to WO 2021/236887 A1, in particular page 17, lines 9 to 15, describing the formation of recesses by ablating material from the lens surface using laser radiation, or the formation of small depressions, bubbles, or craters by interaction of lens material with focused laser radiation, the laser process parameters are such as to cure or precure an uncured coating composition or uncured coating compositions by the application of laser radiation. The laser process parameters are determined such that applied laser radiation does not interact with the lens surface of the spectacle lens and thus does not damage the lens surface of the spectacle lens. Only the one coating composition or the more coating compositions applied to a respective lens surface are cured or precured in (a) position(s) or in (a) domain(s) to result in one structure or in a plurality of structures. The structure(s) is/are formed of cured/precured coating composition(s), for example, when in case of a plurality of concentric ring-shaped structures the plurality of concentric ring-shaped structures consist of the cured/precured coating composition(s). The structure(s) is/are caused by cured/precured coating composition(s), for example, when in case of a plurality of concentric ring-shaped structure the structure-free zones consist of the cured/precured coating composition(s).

In contrast to WO 2021/236887 A1, in particular page 15, lines 28 to 30 in connection with Figure 2 describing the formation of optical elements by inkjetting a curable material onto a surface of a lens ophthalmic blank and then curing the material to set the optical elements in the pattern, page 16, lines 13 to 16 suggests UV lamps or thermal curing, laser process parameters are determined to cure by the application of laser radiation the curable material only in a predefined position or domain.

The problem has been solved by the method of claim 1. With the before described method a digital twin of a coated spectacle lens comprising any one of the before mentioned structures as well as any arbitrarily selected structure is designed. As the before mentioned structures being proposed to be suitable to prevent or to control a progression of myopia or hyperopia said digital twin may be also designed in that any designed structure thereof may be used in prevention or control of myopia or hyperopia progression.

In a preferred embodiment of the invention the method configured for designing a digital twin of a coated spectacle lens by means of a computer for the purpose of a use of the digital twin for manufacturing the coated spectacle lens is characterized in
- determining laser process parameters such as to comprise at least one of
   ∘ a spatial variation in z direction of a setting of one laser process parameter or more laser process parameters,
   ∘ a spatial variation in x,y direction of a setting of one laser process parameter or more laser process parameters,
   each to achieve (i) one predefined structure or (ii) a plurality of predefined structures or (iii) a same predefined structure out of said plurality of predefined structures.

Preferably, the method for configured for designing a digital twin of a coated spectacle lens by means of a computer for the purpose of a use of the digital twin for manufacturing the coated spectacle lens is characterized in
- determining laser process parameters such as to comprise at least one of
   ∘ a spatial variation in z direction of a setting of one laser process parameter or more laser process parameters,
   ∘ a spatial variation in x,y direction of a setting of one laser process parameter or more laser process parameters,
each to achieve the coated spectacle lens comprising (i) one structure corresponding to said one predefined structure or (ii) a plurality of structures corresponding to said plurality of predefined structures or (iii) a same structure out of a plurality of structures corresponding to said same predefined structure out of said plurality of predefined structures.

A surface normal at either an apex of a front surface of a digital twin of a spectacle lens or an apex of a back surface of a digital twin of a spectacle lens shall define an origin of an x,y,z coordinate system and a "z direction".

An "x,y direction" shall be in a tangential plane to either said front surface at the apex or said back surface at the apex. An x direction and a y direction shall be perpendicular to each other in said tangential plane.

Instead of the surface normal at the apex of the front surface or instead of the surface normal at the apex of the back surface an optical centre of the digital twin of the spectacle lens may define an origin of the x,y,z coordinate system and a surface normal at the optical centre may define a z direction. The optical centre of a digital twin of a spectacle lens is defined analogously as in ISO 13666:2019(E), section 3.2.15, as intersection of the optical axis with the front surface of the digital twin of the spectacle lens. The x,y direction then is in the tangential plane to said intersection with the front surface. In said tangential plane the x direction and the z direction are perpendicular to each other.

In case a front surface or a back surface of a digital twin of a spectacle lens is for example a power-variation surface or another surface without an unambiguously definably apex, preferably a surface normal at a fitting point of the digital twin of the spectacle lens shall define the origin of the x,y,z coordinate system and a primary direction may define a z direction. The fitting point of a digital twin of a spectacle lens is defined analogously as in ISO 13666:2019(E), section 3.2.34, a point on the front surface of digital twin of a spectacle lens or a digital twin of a blank stipulated by the manufacturer for virtual positioning the respective digital twin in front of an eye. The primary direction of a digital twin of a spectacle lens is defined analogously as in ISO 13666:2019(E), section 3.2.25, as direction of a virtually represented line of sight, usually taken to be the horizontal, to an object at an infinite distance assumed with habitual head and body posture when assumed looking straight ahead in unaided vision. In that case, the x,y direction is in the plane perpendicular to said primary direction. In said plane perpendicular to said primary direction the x direction and the y direction are perpendicular to each other.

A "spatial variation" of laser process parameters shall mean that a setting of one laser process parameter or a setting of more laser process parameters is/are varied dependent on a discrete x,y,z position to achieve at least one of (i) one predefined structure, (ii) a plurality of predefined structures, (iii) a same predefined structure out of a plurality of predefined structures, each of a digital twin of a coated spectacle lens. "A discrete x,y,z position" preferably comprises one discrete x,y,z position or more discrete x,y,z positions.

A "spatial variation in z direction" of laser process parameters shall mean that a setting of one laser process parameter or a setting of more laser process parameters is/are varied with respect to a discrete x,y position in z direction only to achieve (i) one predefined structure or a (ii) plurality of predefined structures or to achieve (iii) a same predefined structure out of a plurality of predefined structures each of a digital twin of a coated spectacle lens. "A discrete x,y position" preferably comprises one discrete x,y position or more discrete x,y positions.

A "spatial variation in x,y direction" of laser process parameters shall mean that a setting of one laser process parameter or a setting of more laser process parameters is/are varied with respect to discrete z positions in x,y direction only to achieve (i) one predefined structure or a (ii) plurality of predefined structures or to achieve a (iii) same predefined structure out of a plurality of predefined structures each of a digital twin of a coated spectacle lens. "Discrete z positions" preferably comprises one z position for one x,y position, different z positions for an identical x,y position or different z positions for different x,y positions.

A "spatial variation in x,y,z direction" of laser process parameters shall mean that a setting of one laser process parameter or a setting of more laser process parameters is/are varied with respect to discrete x,y,z positions in x,y direction and in z direction to achieve (i) one predefined structure or a (ii) plurality of predefined structures or (iii) a same predefined structure out of a plurality of predefined structures each of a digital twin of a coated spectacle lens. "Discrete x,y,z positions" preferably comprises x,y,z positions which are different from each other.

The spatial variation of laser process parameters in at least one of a z direction, an x,y direction and an x,y,z direction set such as to achieve (i) one predefined structure of a digital twin of a coated spectacle lens shall mean that the respective spatial variation is set such as to achieve a same (i) one predefined structure of said digital twin.

The spatial variation of laser process parameters in at least one of a z direction, an x,y direction and an x,y,z direction set such as to achieve (ii) a plurality of predefined structures of a digital twin of a coated spectacle lens shall preferably comprise that the respective spatial variation is set such as to achieve (ii) a plurality of same predefined structures of said digital twin. In said plurality of same predefined structures preferably each predefined structure is a same predefined structure.

The spatial variation of laser process parameters in at least one of a z direction, an x,y direction and an x,y,z direction set such as to achieve (iii) a same predefined structure out of a plurality of predefined structures shall preferably comprise that the respective spatial variation is set such as to achieve (iii) one same predefined structure or more same predefined structures each out of a plurality of predefined structures.

The spatial variation of laser process parameters may comprise a variation or modification of a setting of one laser process parameter or more laser process parameters in z direction to achieve (i) one predefined structure or (ii) a plurality of predefined structures or (iii) a same predefined structure out of a plurality of predefined structures of a digital twin of a coated spectacle lens. Said spatial variation of laser process parameters comprises a variation of a setting of one or more laser process parameter(s) in z direction with respect to one discrete x,y position or with respect to more x,y positions to achieve (i) one predefined structure or (ii) a plurality of predefined structures or (iii) a same predefined structure out of a plurality of predefined structures of a digital twin of a coated spectacle lens. The more discrete x,y positions preferably are directly adjacent to each other or neighbouring each other. The discrete x,y position defines a position of one predefined structure or a part of a same one predefined structure on a lens surface of the digital twin of the coated spectacle lens comprising said structure or said part of said structure. The discrete x,y positions define a domain of (i) one predefined structure or domains of (ii) a plurality of predefined structures on a lens surface of the digital twin of the coated spectacle lens comprising said structure(s).

Alternatively or additionally, the spatial variation of laser process parameters may comprise a variation or modification of a setting of one laser process parameter or more laser process parameters in x,y direction to achieve (i) one predefined structure or (ii) a plurality of predefined structures or (iii) a same predefined structure out of a plurality of predefined structures of a digital twin of a coated spectacle lens. Said spatial variation of laser process parameters comprises a variation of a setting of one or more laser process parameter(s) in x,y direction with respect to discrete z positions to achieve (i) one predefined structure or (ii) a plurality of predefined structures or (iii) a same predefined structure out of a plurality of predefined structures of a digital twin of a coated spectacle lens. The discrete z positions preferably are directly adjacent to each other or neighbouring each other. The discrete z positions are part of discrete x,y,z positions defining respective x,y positions on a lens surface of a digital twin of a coated spectacle lens comprising said (i) one predefined structure or (ii) said plurality of predefined structures or (iii) said same predefined structure out of said plurality of predefined structures.

In case laser process parameters comprise one set of predefined types of laser process parameters or more sets of predefined types of laser process parameters a setting of at least one laser process parameter thereof is determined such as to comprise at least one of a spatial variation in z direction and a spatial variation in x,y direction to achieve (i) one predefined structure or (ii) a plurality of predefined structures or (iii) a same predefined structure out of a plurality of predefined structures each of a digital twin of a coated spectacle lens.

In one set of predefined types of laser process parameters a setting of at least one laser process parameter may be determined such as to comprise a variation in z direction for one x,y position, a variation in more than one z direction for more x,y directions, or a variation in each z direction for more x,y directions to achieve (i) one predefined structure or (ii) a plurality of predefined structures or (iii) a same predefined structure out of a plurality of predefined structures each of a digital twin of a coated spectacle lens.

Alternatively or additionally to said variation in z direction, in one set of predefined types of laser process parameters a setting of at least one laser process parameter may be determined such as to comprise a variation in x,y direction to achieve (i) one predefined structure or (ii) a plurality of predefined structures or (iii) a same predefined structure out of a plurality of predefined structures each of a digital twin of a coated spectacle lens.

In case laser process parameters comprise more sets of predefined types of laser process parameters of which a setting of at least one laser process parameter is determined such as to comprise at least one of a spatial variation in z direction and a spatial variation in x,y direction to achieve (i) one predefined structure or (ii) a plurality of predefined structures or (iii) a same predefined structure out of a plurality of predefined structures each of a digital twin of a coated spectacle lens.

In a preferred embodiment of the invention the method configured for designing a digital twin of a coated spectacle lens by means of a computer for the purpose of a use of the digital twin for manufacturing the coated spectacle lens comprises the step of
- revising laser process parameters by manufacturing a coated spectacle lens
   ∘ to confirm said laser process parameters or
   ∘ to redetermine laser process parameters based on curing characteristics of a coating composition to achieve (i) one predefined structure or a (ii) plurality of predefined structures of a digital twin of the coated spectacle lens or a (iii) same structure out of a plurality of predefined structures.

Preferably, the method configured for designing a digital twin of a coated spectacle lens by means of a computer for the purpose of a use of the digital twin for manufacturing the coated spectacle lens comprises the step of
- revising laser process parameters by manufacturing the coated spectacle lens
   ∘ to confirm said laser process parameters or
   ∘ to redetermine laser process parameters based on curing characteristics to achieve the coated spectacle lens comprising (i) one structure corresponding to said (i) one predefined structure or a (ii) plurality of structures corresponding to said plurality of predefined structures or a (iii) same structure out of said plurality of structures corresponding to said same predefined structure out of said plurality of predefined structures.

"Revising" laser process parameters preferably follow the step of determining laser process parameters to achieve (i) one predefined structure or (ii) a plurality of predefined structures of a digital twin a coated spectacle lens in that said digital twin is transferred to physical reality, a coated spectacle lens corresponding to said digital twin of said spectacle lens is manufactured. For revising laser process parameters, a step of determining laser process parameters to achieve a coated spectacle lens comprising (i) one structure or (ii) a plurality of structures corresponding to (i) one predefined structure or (ii) a plurality of predefined structures of a digital twin of the coated spectacle lens is followed by a step of manufacturing said coated spectacle lens. For revising laser process parameters, a step of determining laser process parameters to achieve a coated spectacle lens comprising (iii) a same out of a plurality of structures corresponding to (iii) a same predefined structure out of said plurality of predefined structures of a digital twin of the coated spectacle lens is followed by a step of manufacturing said coated spectacle lens. The manufacturing of the coated spectacle lens comprises at least the step of applying the determined laser process parameters to selectively cure a coating composition applied to a lens surface of a spectacle lens using laser radiation or a laser beam to result in a coated spectacle lens comprising (i) one structure or (ii) a plurality of structures or (iii) a same structure out of said plurality of structures.

In case the coated spectacle lens comprises (i) one structure or (ii) a plurality of structures corresponding to (i) one predefined structure or (ii) a plurality of predefined structures of a respective digital twin of the coated spectacle lens, then laser process parameters which had been determined with respect to said digital twin are confirmed. In case the coated spectacle lens comprises (iii) a same structure out of a plurality of structures corresponding to a same predefined structure out of said plurality of predefined structures of a respective digital twin of the coated spectacle lens, then laser process parameters which had been determined with respect to said digital twin are confirmed.

In case the coated spectacle lens comprises (i) one structure or (ii) a plurality of structures not corresponding to (i) one predefined structure or (ii) a plurality of predefined structures of a respective digital twin of the coated spectacle lens, then laser process parameters which had been determined with respect to said digital twin are redetermined. In case the coated spectacle lens comprises (iii) a same structure out of a plurality of structures not corresponding to a same predefined structure out of said plurality of predefined structures of a respective digital twin of the coated spectacle lens, then laser process parameters which had been determined with respect to said digital twin are redetermined.

The laser process parameters are redetermined based on curing characteristics of a coating composition to achieve said (i) one predefined structure or (ii) said plurality of predefined structures of the digital twin of the coated spectacle lens. The laser process parameters are redetermined based on curing characteristics of a coating composition to achieve said (iii) same predefined structure out of said plurality of predefined structures of the digital twin of the coated spectacle lens. If necessary, laser process parameters are redetermined until the coated spectacle lens comprises (i) one structure or (ii) a plurality of structures corresponding to (i) one predefined structure or (ii) a plurality of predefined structures of the digital twin of the coated spectacle lens. If necessary, laser process parameters are redetermined until the coated spectacle lens comprises (iii) a same structure out of a plurality of structures corresponding to (iii) a same predefined structure out of a plurality of predefined structures of the digital twin of the coated spectacle lens. When redetermining laser process parameters a result of the application of the determined laser process parameters to selectively cure the coating composition preferably is taken into account. Redetermining laser process parameters includes amending or adapting determined laser process parameters.

The step of redetermining the laser process parameters taking the result of the application of the determined laser process parameters into account, may be followed by a step of applying the redetermined laser process parameters, followed by a step of again redetermining the laser process parameters taking the result of the application of the redetermined laser process parameters into account, and so on, end when with the redetermined or again redetermined laser process parameters (i) one predefined structure or (ii) a plurality of predefined structure or (iii) a same structure out of a plurality of structures is/are achievable or achieved.

Revising laser process parameters is comprised in a method configured for designing a digital twin of a coated spectacle lens by means of a computer thereby considering a result of applied determined laser process parameters, if necessary, once or more than once.

In a preferred embodiment of the invention, the method configured for designing a digital twin of a coated spectacle lens by means of a computer for the purpose of a use of the digital twin for manufacturing the coated spectacle lens comprises the step of
- determining laser process parameters such as to stepwise achieve at least one of
   ∘ (i) one predefined structure,
   ∘ a (ii) plurality of predefined structures,
   ∘ (iii) a same predefined structure out of a plurality of predefined structures.

To "stepwise" achieve (i) one predefined structure or (ii) a plurality of predefined structures or (iii) a same predefined structure out of a plurality of predefined structures each of a digital twin of a coated spectacle lens shall comprise that one laser process parameter or more laser process parameters is/are determined in a predefined sequence to achieve said (i) one predefined structure or said (ii) plurality of predefined structures or (iii) said same predefined structure out of said plurality of predefined structures. One laser process parameter is determined in a predefined sequence if a setting of said one laser process parameter is modified in a predefined sequence. More laser process parameters are determined in a predefined sequence if in a predefined sequence a setting of different laser process parameters is modified.

To stepwise achieve said (i) one predefined structure of said digital twin a setting of at least one laser process parameter is determined in a predefined sequence to achieve (i) one same predefined structure. To achieve said (i) one same predefined structure said setting of said at least one laser process parameter preferably is determined such as to achieve said (i) one same structure in said predefined sequence in one position or in one domain of a lens surface of said digital twin.

To stepwise achieve said (ii) plurality of predefined structures of said digital twin a setting of at least one laser process parameter is determined in a predefined sequence to achieve said (ii) plurality of predefined structures. To achieve said (ii) plurality of predefined structures said setting of said at least one laser process parameter preferably is determined such as to achieve a plurality of structures each having a same structure in a predefined sequence in different positions or in different domains of a lens surface of said digital twin. Alternatively, to achieve said (ii) plurality of predefined structures a setting of at least one laser process parameter may be determined such as to achieve in a predefined sequence a plurality of structures not having a same structure in different positions or in different domains of a lens surface of a digital twin of a coated spectacle lens.

To stepwise achieve said (iii) same predefined structure out of a plurality of predefined structures a setting of at least one laser process parameter is determined in a predefined sequence to achieve said (iii) same predefined structure out of said plurality of predefined structures. Said same structure may comprise one same predefined structure out of said plurality of structures or more same predefined structures out of said plurality of structures. To achieve said one same predefined structure said setting of said at least one laser process parameter is determined such as to achieve said one same structure in a predefined sequence in one position or in one domain of a lens surface of said digital twin. To achieve said more same predefined structures said setting of said at least one laser process parameter preferably is determined such as to achieve a respective same structure of said more same structures in a predefined sequence in different positions or in different domains of a lens surface of said digital twin.

The laser process parameters may comprise one set of predefined types of laser process parameters or more sets of predefined laser process parameters to stepwise achieve said (i) one predefined structure or said (ii) plurality of predefined structures or said (iii) same structure out of a plurality of predefined structures of said digital twin.

In said one set of predefined types of laser process parameters, a setting of one laser process parameter or a setting of more laser process parameters may be determined in a predefined sequence to achieve (i) one same predefined structure or a (ii) plurality of predefined same structures or a (iii) same structure out of a plurality of predefined structures. Determining laser process parameters in a predefined sequence may also comprise a determination of one set of predefined types of laser process parameters in which a setting of at least one laser process parameter is determined to achieve said (i) one same predefined structure or said (ii) plurality of same predefined structures or said (iii) same predefined structure out of said plurality of predefined structures.

In said more sets of predefined types of laser process parameters, a setting of one laser process parameter or a setting of more laser process parameters in each set thereof may be determined in a predefined sequence to achieve (i) one same predefined structure or a (ii) plurality of predefined same structures or a (iii) same structure out of a plurality of predefined structures.

Said more sets of predefined types of laser process parameters may comprise
- a first set of predefined types of laser process parameters in which a first setting of at least one laser process parameter, e.g., a first laser process parameter, is determined;
- a second set of predefined types of laser process parameters in which a second setting of a same laser process parameter, e.g., a second setting of the first laser process parameter, or a first setting of a different laser process parameter, e.g., a first setting of a second laser process parameter, is determined;
- optionally a third set of predefined types of laser process parameters in which a third setting of a same laser process parameters, e.g., a third setting of the first laser process parameter or a second setting of the second laser process parameter, or a first setting of an again different laser process parameter, e.g., a first setting of a fourth laser process parameter, is determined.

For each optional further set of said more sets of predefined types of laser process parameters at least a setting of at least one laser process parameter is determined.

In said one set or in said more sets of laser process parameters a setting of one laser process parameter or a setting of more laser process parameters is determined in a predefined sequence such as to achieve stepwise, these settings taken together, said same (i) one predefined structure or said (ii) plurality of same predefined structures or said (iii) same predefined structure out of said plurality of predefined structures of said digital twin.

Determining laser process parameters in a predefined sequence may also comprise a determination of one set or more sets of predefined types of laser process parameters in which in each set a setting of at least one process parameter is determined such as to achieve said (i) one same predefined structure or said (ii) plurality of predefined structures or said (iii) same predefined structure out of said plurality of predefined structures. Said determined laser process parameters are determined in a predefined sequence such as to achieve altogether said same (i) one predefined structure or said (ii) plurality of same predefined structures or said (iii) same predefined structure out of said plurality of predefined structures.

In a preferred embodiment of the invention, the method comprises the step of manufacturing a coated spectacle lens based on a designed digital twin of said coated spectacle lens.

The method is configured for manufacturing a coated spectacle lens based on a designed digital twin of said coated spectacle lens.

The problem has been solved by the method of manufacturing the coated spectacle lens. With the before described method a digital twin of a coated spectacle lens is transferred to physical reality, i.e., a respective coated spectacle lens which comprises any one of the before mentioned structures or any arbitrary structure is manufactured. The coated spectacle lens may comprise (i) one structure or a (ii) plurality of structures designed such as to be suitable for being used in prevention or control of myopia or hyperopia progression.

In a preferred embodiment of the invention, the manufacturing comprises the step of
- selectively curing a coating composition by applying determined laser process parameters to achieve (i) one structure or a (ii) plurality of structures corresponding to said (i) one predefined structure or said (ii) plurality of predefined structures.

The method configured for manufacturing a coated spectacle lens is characterized at least in the step of selectively curing a coating composition by applying determined laser process parameters.

A surface layer of a coated spectacle lens forming or causing (i) one structure or (ii) a plurality of structures preferably requires at least the manufacturing step of:
- selectively curing a coating composition using laser radiation or a laser beam by applying determined laser process parameters.

A surface layer may comprise one surface layer, accordingly a coating composition may comprise one coating composition resulting in said one surface layer; or more surface layers, accordingly a coating composition may comprise more coating compositions resulting in said more surface layers.

One surface layer of a coated spectacle lens forming or causing (i) one structure or (ii) a plurality of structures preferably requires at least the manufacturing step of:
- selectively curing one coating composition using laser radiation or a laser beam by applying determined laser process parameters.

As described before the laser process parameters are determined such that one surface layer of said coated spectacle lens resulting from said selectively cured one coating composition comprises said (i) one structure or said (ii) plurality of structures corresponding to (i) one predefined structure or (ii) a plurality of predefined structures of a digital twin of said coated spectacle lens. The determined laser process parameters are thereby considering curing characteristics of said one coating composition. Preferably, said one coating composition is applied to a front surface, a back surface or to a front and back surface of a spectacle lens. Said front surface or said back surface of said spectacle lens may already comprise one surface layer or more surface layers. Preferably, said one coating composition is applied to fully cover said front surface and/or said back surface of said spectacle lens. Said coating composition may be applied for example by dip coating, spin coating or inkjet printing, preferably spin coating. The definition of "selectively curing" as well as for "applied to fully cover", both given before, shall apply.

Said one coating composition is
- selectively cured to result, at least with respect to a selectively cured part of said one coating composition, in one surface layer forming or causing said (i) one structure or said (ii) plurality of structures of the coated spectacle lens. The not cured part of said one coating composition may be removed.

Preferably, one surface layer of a coated spectacle lens forming or causing (i) one structure or (ii) a plurality of structures corresponding to (i) one predefined structure or (ii) a plurality of predefined structures of a digital twin of said coated spectacle lens requires at least the manufacturing steps of
a) applying said one coating composition to fully cover a front surface and/or to fully cover a back surface of a spectacle lens, preferably said front surface,
b) selectively curing said one coating composition using laser radiation or a laser beam by applying the determined laser process parameters,
c) removing not cured coating composition from said front surface and/or said back surface.

The selectively cured one coating composition of step b) forms one surface layer of a coated spectacle lens, said one surface layer forming or causing (i) one structure or (ii) a plurality of structures. Even though the not cured coating composition is removed in step c) and thus the one surface layer resulting in step b) is not completely covering the front surface and/or the back surface of the spectacle lens, as the case may have been when applying the one coating composition in step a), the selectively cured coating composition shall be regarded as one surface layer.

Said one coating composition preferably is at least one selected from the group consisting of
- one UV curable coating composition curable by a selected wavelength of laser radiation or a laser beam resulting in one surface layer,
- one primer hard coating composition resulting in one primer surface layer for a hard coating,
- one primer photochromic coating composition resulting in one primer surface layer for a photochromic surface layer,
- one hard coating composition resulting in one hard coating surface layer, hard coating as defined in ISO 13666:2019(E), section 3.18.2,
- one photochromic coating composition resulting in one photochromic surface layer.

Said one coating composition may be a clear coating composition, clear in the sense of "clear lens" defined in ISO 13666:2019(E), section 3.5.7, said clear coating composition having no intended colour/ tint in transmission. Said one coating composition preferably is a clear coating composition. Alternatively, said one coating composition may be a tinted coating composition, tinted in the sense of "tinted lens" defined in ISO 13666:2019(E), section 3.5.6, said tinted coating composition having a noticeable colour (including grey) in transmission.

Said one coating composition may result in one surface layer provided anyway in the coated spectacle lens or in one additional surface layer of the coated spectacle lens. In case said one surface layer is provided anyway in the coated spectacle lens no additional surface layer for forming or causing (i) one structure or (ii) a plurality of structures corresponding to (i) one predefined structure or (ii) a plurality of predefined structures of a respective digital twin of said coated spectacle lens is necessary. Said one surface layer itself fulfils a double function of on the one hand being responsible for forming or causing said (i) one structure or said (ii) plurality of structures of said coated spectacle lens and on the other to fulfil its function. To fulfil its function shall comprise to serve a purpose for which said surface layer is comprised in said coated spectacle lens. An additional benefit of said one surface layer provided anyway in the coated spectacle lens is that no additional process time for an application of one coating composition resulting in said one surface layer is required as said one coating composition is anyway applied.

In case said one additional surface layer is comprised in the coated spectacle lens only for the reason of forming or causing said (i) one structure or said (ii) plurality of structures, said one additional surface layer preferably does neither serve a further purpose nor interferes with an adjacent surface layer nor is detrimental with respect to a characteristic of said coated spectacle lens. Said characteristic may be an optical property of the coated spectacle lens, like yellowing, or a mechanical property, like delamination. Said one additional surface layer preferably is selected in that a minimum of process time is lost due to an application of one additional coating composition resulting in said additional surface layer.

More surface layers of a coated spectacle lens forming or causing (i) one structure or (ii) a plurality of structures preferably require at least the manufacturing step of
- selectively curing more coating compositions using laser radiation or a laser beam by applying determined laser process parameters.

The laser process parameters are determined such that more surface layers of said coated spectacle lens resulting from said more coating compositions comprises said (i) one structure or said (ii) plurality of structures corresponding to (i) one predefined structure or (ii) a plurality of predefined structures of a digital twin of said coated spectacle lens. The laser process parameters are determined considering curing characteristics of said coating compositions.

Preferably, said coating compositions are applied as a stack to a front surface, a back surface or as a stack to each of a front and back surface of a spectacle lens. Said front surface or said back surface may already comprise one surface layer or more surface layers. Preferably, said coating compositions are applied to fully cover said front surface and/or said back surface of said spectacle lens. Said coating compositions may be applied subsequently by dip coating, spin coating or inkjet printing, preferably spin coating. The definition of "selectively curing" as well as for "applied to fully cover", both given before, shall apply. Subsequently applying said coating composition may comprise a drying of a coating composition before a next or subsequent coating composition is applied.

Said coating compositions are
- selectively cured simultaneously to result, with respect to a simultaneously selectively cured part of said coating compositions, in more surface layers forming or causing said (i) one structure or said (ii) plurality of structures of the coated spectacle lens. The not cured part of said coating compositions may be removed.

Preferably, more surface layers of a coated spectacle lens forming or causing (i) one structure or (ii) a plurality of structures corresponding to (i) one predefined structure or (ii) a plurality of predefined structures of a digital twin of said coated spectacle lens require at least the manufacturing steps of
a) applying said coating compositions, preferably as a stack, to fully cover a front surface and/or to fully cover a back surface of a spectacle lens, preferably said front surface,
b) selectively curing simultaneously said coating compositions using laser radiation or a laser beam by applying determined laser process parameters,
c) removing not cured coating compositions from said front surface and/or said back surface.

The selectively cured coating compositions of step b) form more surface layers of a coated spectacle lens, said more surface more layers forming or causing (i) one structure or (ii) a plurality of structures corresponding to (i) one predefined structure or (ii) a plurality of predefined structures of a respective digital twin of said coated spectacle lens. Even though the not cured coating compositions are removed in step c) and thus the more surface layers resulting in step b) are not completely covering the front surface and/or the back surface of the spectacle lens, as the case may have been when applying the coating compositions in step a), remaining selectively cured coating compositions shall be regarded as more surface layers.

Said more coating compositions may be selected from the following coating compositions:
a UV curable coating composition curable by a selected wavelength of laser radiation or a laser beam, a primer hard coating composition, a primer photochromic coating composition, a hard coating composition, a photochromic coating composition.

Said more coating compositions may be composed of a same coating composition or a different coating composition. Preferably, the same coating composition comprises identical chemical ingredients, either in identical amounts or in different amounts.

Said more coating compositions preferably comprise clear coating compositions only. However, at least one of said more coating compositions may be a tinted coating composition.

Said more coating compositions may result in more surface layers provided anyway in the coated spectacle lens, in part provided anyway in the coated spectacle lens, or in more additional surface layers of the coated spectacle lens. In case said more surface layer are provided anyway in the coated spectacle lens no additional surface layer or no additional surface layers is/are necessary for forming or causing said (i) one structure or said (ii) plurality of structures corresponding to said (i) one predefined structure or said (ii) plurality of predefined structures of said respective digital twin of said coated spectacle lens. Said more surface layers themselves fulfil each a double function of on the one hand being responsible for forming or causing said (i) one structure or said (ii) plurality of structures of said coated spectacle lens and on the other to fulfil their respective function. To fulfil their respective function shall comprise to serve a respective purpose for which a respective surface layer is comprised in said coated spectacle lens. An additional benefit of said more surface layers provided anyway in the coated spectacle lens is that no additional process time for an application of more coating compositions resulting in said more surface layers is required as said more coating compositions are anyway applied.

In case said more surface layers are provided in part anyway in the coated spectacle lens, in said part no additional surface layer(s) is/are necessary for forming or causing said (i) one structure or (ii) said plurality of structures. For said part of said more surface layers the before described applies. For a part of said more surface layers not provided anyway in the coated spectacle lens, the hereinafter described with respect to said more additional surface layers applies.

In case said more additional surface layers are comprised in the coated spectacle lens only for the reason of forming or causing said (i) one structure or said (ii) plurality of structures, said more additional surface layers preferably do neither serve a further purpose nor interfere with an adjacent surface layer nor are detrimental with respect to a characteristic of said coated spectacle lens. Said more additional layers preferably are selected in that a minimum of process time is lost due to an application of more additional coating compositions resulting in said additional surface layers. Therefore, more surface layers provided anyway, or more surface layer provided anyway in part in the coated spectacle lens are preferred.

Optionally, more surface layers of a coated spectacle lens forming or causing said (i) one structure or said (ii) plurality of structures corresponding to said (i) one predefined structure or said (ii) plurality of predefined structures of said respective digital twin of said spectacle lens, for example as described before, may comprise an additional step of
- applying one additional coating composition or more additional coating compositions.

Said one additional coating composition results in one additional surface layer covering said more surface layers resulting from said selectively cured more coating compositions and a lens surface of a spectacle lens, i.e., either a front surface or a back surface of said spectacle lens, comprising said more surface layers. Said one additional coating composition preferably is applied via spin coating, dip coating or inkjet printing, preferably spin coating. Said one additional coating composition preferably is selected from a hard coating composition and a photochromic coating composition.

Said more additional coating compositions result in more additional surface layers, the first thereof covering said more surface layers resulting from said selectively cured more coating compositions and a lens surface of a spectacle lens, i.e., a front surface or a back surface of said spectacle lens, comprising said more surface layers. Said more additional coating compositions or at least a part of said more additional coating compositions may be applied subsequently via spin coating, dip coating or inkjet printing, preferably spin coating. Said more additional coating compositions may comprise hard coating composition or a photochromic coating composition. Said more additional surface layers may further comprise an anti-reflective coating as defined in ISO 13666:2019(E), section 3.18.3, a clean coating as defined in ISO 13666:2019(E), section 3.18.4, a hydrophobic coating as defined in ISO 13666:2019(E), section 3.18.5, a hydrophilic coating as defined in ISO 13666:2019(E), section 3.18.6, an anti-fog coating as defined in ISO 13666:2019(E), section 3.18.7, an anti-static coating as defined in ISO 13666:2019(E), section 3.18.8. Said more additional surface layers may also be applied via physical vapour deposition.

The laser process parameters preferably are determined such that said more surface layers resulting from said selectively cured more coating compositions and said one additional surface layer resulting form said one additional coating composition; or said more surface layers resulting from said selectively cured more coating compositions and said more additional surface layers resulting form said more additional coating compositions together form or cause said (i) one structure or said (i) plurality of structures of said coated spectacle lens.

Alternatively, more surface layers of a coated spectacle lens forming or causing (i) one structure or (ii) a plurality of structures preferably require at least the manufacturing steps of
- selectively curing a first coating composition using laser radiation or a laser beam by applying determined laser process parameters,
- applying a second coating composition.

The laser process parameters are determined such that a first surface layer of said coated spectacle lens resulting from said selectively cured first coating composition and a second surface layer of said coated spectacle lens resulting from said second coating composition together form or cause (i) one structure or (ii) a plurality of structures corresponding to (i) one predefined structure or (ii) a plurality of predefined structures of a digital twin of said coated spectacle lens. The laser process parameters are thereby considering curing characteristics of said first coating composition.

Optionally, more surface layers of a coated spectacle lens forming or causing (i) one structure or (ii) a plurality of structures may require an additional manufacturing step of
- applying a third coating composition.

The laser process parameters are determined such that a first surface layer of said coated spectacle lens resulting from said selectively cured first coating composition, a second surface layer of said coated spectacle lens resulting form said second coating composition and a third surface layer of said coated spectacle lens resulting from said third coating composition together form or cause (i) one structure or (ii) a plurality of structures of said coated spectacle lens corresponding to (i) one predefined structure or (ii) a plurality of predefined structures of a digital twin of said coated spectacle lens. The laser process parameters are thereby considering curing characteristics of said first coating composition. In case the coated spectacle lens comprises more than said three surface layers, the laser process parameters are determined such that the first surface layer of said coated spectacle lens resulting from said selectively cured first coating composition and the second, third, fourth and each further surface layer of the coated spectacle lens resulting from the second, third, fourth and each further coating composition together form or cause (i) one structure or (ii) a plurality of structures of said coated spectacle lens corresponding to (i) one predefined structure or (ii) a plurality of predefined structures of a digital twin of said coated spectacle lens. The laser process parameters are thereby considering curing characteristics of said first coating composition.

In a surface layer sequence of a coated spectacle lens, said first surface layer is a surface layer next, not necessarily adjacent, to a front surface and/or a back surface of a spectacle lens and said second surface layer is a surface layer further away from a same front surface and/or a same back surface of said spectacle lens. An optional third surface layer and each optional further surface layer is a surface layer further away from a same front surface and/or a same back surface of said spectacle lens as the said second surface layer.

Preferably, said first coating composition is applied to a front surface, a back surface or to a front and back surface of a spectacle lens. Said front surface or said back surface may already comprise one or more surface layer(s). Preferably, said first coating composition is applied to fully cover said front surface and/or said back surface of said spectacle lens. Said first coating composition may be applied for example by dip coating, spin coating, or inkjet printing, preferably spin coating. The definition of "selectively curing" as well as for "applied to fully cover", both given before, shall apply.

Said second coating composition may be applied for example by dip coating, spin coating, or inkjet printing, preferably spin coating or dip coating, preferably to fully cover said first surface layer resulting from selectively curing said first coating composition and a front surface comprising said first surface layer; and/or preferably to fully cover said first surface layer resulting from selectively curing said first coating composition and a back surface comprising said first surface layer. An optional third coating composition and each optional further coating composition may be applied for example by dip coating, spin coating, or ink jet printing, preferably to fully cover said second surface layer resulting from said second coating composition. An optional third surface layer or an optional further surface layer may result from a third optional or further optional coating composition applied for example by dip coating, spin coating, or inkjet printing, preferably spin coating or dip coating, or may comprise a layer stack applied via physical vapour deposition, each to cover a respective surface layer underneath preferably fully.

Said first coating composition is
- selectively cured to result, with respect to a selectively cured part of said first coating composition, in a first surface layer. The not cured part of said first coating composition may be removed.

Preferably, more surface layers of a coated spectacle lens forming or causing (i) one structure or (ii) a plurality of structures corresponding to (i) one predefined structure or (ii) a plurality of predefined structures of a digital twin of said coated spectacle lens require at least the manufacturing steps of
a) applying a first coating composition to fully cover a front surface and/or to fully cover a back surface of a spectacle lens, preferably said front surface,
b) selectively curing said first coating composition using laser radiation or a laser beam by applying determined laser process parameters,
c) removing not cured first coating composition from said front surface and/or said back surface,
d) applying a second coating composition,
e) curing said second coating composition.

The selectively cured first coating composition of step b) forms a first surface layer of a coated spectacle lens. Even though the not cured coating composition is removed in step c) and thus the first surface layer resulting in step b) is not completely covering the front surface and/or the back surface of the spectacle lens, as the case may have been when applying the first coating composition in step a), the selectively cured first coating composition shall be regarded as first surface layer. As the not cured first coating composition is removed in step c) the second coating composition is applied to said first surface layer and said front surface and/or said back surface comprising said first surface layer. A second coating composition may also be applied to a front surface or back surface of a spectacle lens not comprising said first surface layer. Preferably, the second coating composition is applied to completely cover said front surface and/or said back surface comprising said first surface layer and optionally to completely cover a front surface or a back surface not comprising said first surface layer. After curing step e) said second coating composition results in a second surface layer. Said first surface layer and said second surface layer are forming or causing (i) one structure or (ii) a plurality of structures corresponding to (i) one predefined structure or (ii) a plurality of predefined structures of a digital twin of said coated spectacle lens.

Said first coating composition and said second composition may be composed of a same coating composition. Preferably, the same coating composition comprises identical chemical ingredients, either in identical amounts or in different amounts. A first surface layer resulting from said first coating composition and a second surface layer resulting from said second coating composition differ in that said first surface layer is covering a front surface and/or a back surface of a spectacle lens only in at least one of
- in a position or in positions and
- within a domain or domains,
in which said first coating composition had been selectively cured, as explained before, whereas said second surface layer is completely covering at least a same front surface comprising said first surface layer and/or a same back surface comprising said first surface layer. Said second surface layer preferably covers said first surface layer and a same front surface comprising said first surface layer; and/or said first surface layer and a same back surface comprising said first surface layer. Said second surface layer may also completely cover a front surface and/or a back surface which is not comprising said first surface layer.

In case said first coating composition and said second coating composition are composed of a same coating composition, said same coating composition preferably is at least one selected from the group consisting of
- a UV curable coating composition curable by a selected wavelength of laser radiation or a laser beam resulting in a surface layer,
- a primer hard coating composition resulting in a primer surface layer for a hard coating,
- a primer photochromic coating composition resulting in a primer surface layer for a photochromic surface layer,
- a hard coating composition resulting in a hard coating as defined in ISO 13666:2019(E), section 3.18.2,
- a photochromic coating composition resulting in a photochromic surface layer.

Said same coating composition may be clear or tinted, preferably clear.

Said first coating composition and said second coating composition may be composed of a different coating composition. A first surface layer resulting from said first coating composition and a second surface layer resulting from said second coating composition therefore not only differ in their spatial coverage of a same front surface and/or a same back surface of a spectacle lens. Said first surface layer covers a front surface and/or a back surface of a spectacle lens only in at least one of
- in a position or in positions and
- within a domain or within domains
in which said first coating composition had been selectively cured while said second surface layer at least completely covers a same front surface and/or a same back surface comprising said first surface layer. Said second surface layer preferably covers said first surface layer and a same front surface comprising said first surface layer; and/or said first surface layer and a same back surface comprising said first surface layer. Said second surface layer may also completely cover a front surface and/or a back surface of a spectacle lens not comprising said first surface layer.

An optional third coating composition preferably is composed of a different coating composition to said same first and second coating compositions. A resulting third surface layer preferably covers said second surface layer.

In case said first coating composition and said second coating composition are composed of a different coating composition, said first coating composition preferably is at least one selected from of the group consisting of
- a first UV curable coating composition curable by a selected wavelength of laser radiation or a laser beam resulting in a first surface layer,
- a first primer hard coating composition resulting in a first primer surface layer for a hard coating,
- a first primer photochromic coating composition resulting in a first primer surface layer for a photochromic surface layer,
- a first hard coating composition resulting in a first hard coating as defined in ISO 13666:2019(E), section 3.18.2,
- a first photochromic coating composition resulting in a first photochromic surface layer.

Said first coating composition may be clear or tinted, preferably clear.

Said second coating composition preferably is at least one selected from the group consisting of
- a second UV curable coating composition curable by a selected wavelength of laser radiation or a laser beam resulting in a second surface layer,
- a second primer hard coating composition resulting in a second primer surface layer for a hard coating,
- a second primer photochromic coating composition resulting in a second primer surface layer for a photochromic surface layer,
- a second hard coating composition resulting in a second hard coating as defined in ISO 13666:2019(E), section 3.18.2,
- a second photochromic coating composition resulting in a second photochromic surface layer.

Said second coating composition may be clear or tinted, preferably clear.

An optional third coating composition may be composed of a same coating composition as said first coating composition or as said second coating composition. Preferably, said optional third coating composition is composed of a different coating composition to said first coating composition and to said second coating composition. An optional third surface layer resulting from said third coating composition preferably covers said second surface layer.

Preferably, said first coating composition, preferably selected from one of the before mentioned, and said second coating composition, preferably selected from one of the before mentioned, are selected such that at least one surface layer resulting from a coating composition thereof is anyway part of a surface layer sequence of a coated spectacle lens. For example, if the surface layer sequence of the coated spectacle lens comprises a hard coating, then preferably the second coating composition is selected from a second hard coating composition.

Preferably, said first coating composition, preferably selected from one of the before mentioned, and said second coating composition, preferably selected from one of the before mentioned, are selected such that both surface layers resulting from said coating compositions anyway are part of a surface layer sequence of a coated spectacle lens. For example, if the surface layer sequence of the coated spectacle lens comprises a first hard coating and a second hard coating, then preferably the first coating composition is selected from a first hard coating composition and the second coating composition is selected from a second hard coating composition. The first hard coating preferably is a surface layer next to, but not necessarily directly adjacent, to a front surface or a back surface of a spectacle lens.

Irrespective of whether said first coating composition and said second coating composition being composed of a same or a different coating composition, at least one of a first surface layer or a second surface layer provided anyway in a coated spectacle lens has the additional benefit as outlined before.

An optional third coating composition preferably is composed of a different coating composition to said first coating composition and second coating composition. A resulting third surface layer preferably covers said second surface layer.

More surface layers of a coated spectacle lens forming or causing (i) one structure or (ii) a plurality of structures corresponding to (i) one predefined structure or (ii) a plurality of predefined structures of a digital twin of said coated spectacle lens, may require the manufacturing steps of
a) applying a first coating composition to fully cover a front surface and/or a back surface of a spectacle lens, preferably to fully cover said front surface,
b) precuring said first coating composition using laser radiation or a laser beam by applying determined laser parameters,
c) removing not precured first coating composition,
d) applying a second coating composition,
e) curing said second coating composition.

The front surface of the spectacle lens to which the first coating composition is applied to in step a) may already comprise one surface layer or more surface layers. The same applies to the back surface of the spectacle lens. In step b) said first coating composition is precured preferably to an extend that said precured first coating composition is not removed in step c). Said second coating composition preferably is applied to completely cover said precured first coating composition and a front surface comprising said precured first coating composition and/or to completely cover said precured first coating composition and a back surface comprising said precured first coating composition in step d). Said second coating composition also may be applied to completely cover a front surface or a back surface of a spectacle lens not comprising said precured first coating composition. Curing said second coating composition in step e) preferably is simultaneously curing said precured first coating composition. Preferably, while curing said second coating composition in step e) said precured first coating composition is simultaneously cured, irrespective of whether said first coating composition and said second coating composition are composed of a same or a different coating composition.

Alternatively, more surface layers of a coated spectacle lens forming or causing (i) one structure or (ii) a plurality of structures preferably require at least the manufacturing steps of
- selectively curing a first coating composition using laser radiation or a laser beam by applying determined laser process parameters,
- applying a second coating composition,
- selectively curing a third coating composition using laser radiation or a laser beam by applying determined laser process parameters.

The laser process parameters are determined such that a first surface layer of said coated spectacle lens resulting from said selectively cured first coating composition, a second surface layer of said coated spectacle lens resulting from said second coating composition and a third coating composition resulting from said selectively cured third coating composition together form or cause (i) one structure or (ii) a plurality of structures corresponding to (i) one predefined structure or (ii) a plurality of predefined structures of a digital twin of said coated spectacle lens. The laser process parameters are thereby considering curing characteristics of said first coating composition as well as curing characteristics of said third coating composition.

Optionally, more surface layers of a coated spectacle lens forming or causing (i) one structure or (ii) a plurality of structures may require an additional manufacturing step of
- applying a fourth coating composition.

The laser process parameters are determined such that a first surface layer of said coated spectacle lens resulting from said selectively cured first coating composition, a second surface layer of said coated spectacle lens resulting form said second coating composition, a third surface layer of said coated spectacle lens resulting from said selectively cured third coating composition and a fourth surface layer resulting from said fourth coating composition together form or cause (i) one structure or (ii) a plurality of structures corresponding to (i) one predefined structure or (ii) a plurality of predefined structures of a digital twin of said coated spectacle lens. The laser process parameters are thereby considering curing characteristics of said first coating composition and said third coating composition. In case the coated spectacle lens comprises more than four surface layers, the laser process parameters are determined such that the first surface layer of said coated spectacle lens resulting from said selectively cured first coating composition, the second surface layer resulting from said second coating composition, the third surface layer resulting from said selectively cured third coating composition, the fourth and each further surface layer resulting from said fourth and each further coating composition together form or cause (i) one structure or (ii) a plurality of structures of said coated spectacle lens corresponding to (i) one predefined structure or (ii) a plurality of predefined structures of a digital twin of said coated spectacle lens. The laser process parameters are thereby considering curing characteristics of said first and third coating composition.

In a surface layer sequence of a coated spectacle lens, said first surface layer is a surface layer next, not necessarily adjacent, to a front surface and/or a back surface of a spectacle lens and said third surface layer is a surface layer furthest away from a same front surface and/or a same back surface of said spectacle lens. An optional fourth surface layer and each optional further surface layer is a surface layer further away from a same front surface and/or a same back surface of said spectacle lens as the said third surface layer.

Preferably, said first coating composition is applied to a front surface, a back surface or to a front and back surface of a spectacle lens. Said front surface or said back surface may already comprise one or more surface layer(s). Preferably, said first coating composition is applied to fully cover said front surface and/or said back surface of said spectacle lens. Said first coating composition may be applied for example by dip coating, spin coating, or inkjet printing, preferably spin coating. The definition of "selectively curing" as well as for "applied to fully cover", both given before, shall apply.

Said second coating composition may be applied for example by dip coating, spin coating, or inkjet printing, preferably spin coating or dip coating, preferably to fully cover said first surface layer resulting from selectively curing said first coating composition and a front surface comprising said first surface layer; and/or preferably to fully cover said first surface layer resulting from selectively curing said first coating composition and a back surface comprising said first surface layer.

Said third coating composition may be applied for example by dip coating, spin coating, or inkjet printing, preferably spin coating or dip coating, preferably to fully cover said second surface layer resulting from said second coating composition. An optional fourth surface layer or an optional further surface layer may comprise a fourth or further coating composition applied for example by dip coating, spin coating, or inkjet printing, preferably spin coating or dip coating, or a layer stack applied via physical vapour deposition, each to fully cover a respective surface layer underneath.

Said first coating composition is
- selectively cured to result, with respect to a selectively cured part of said first coating composition, in a first surface layer. The not cured part of said first coating composition may be removed.

Said third coating composition is
- selectively cured to result, with respect to a selectively cured part of said third coating composition, in a third surface layer. The not cured part of said first coating composition may be removed.

Preferably, more surface layers of a coated spectacle lens forming or causing (i) one structure or (ii) a plurality of structures corresponding to (i) one predefined structure or (ii) a plurality of predefined structures of a digital twin of said coated spectacle lens require at least the manufacturing steps of
a) applying a first coating composition to fully cover a front surface and/or to fully cover a back surface of a spectacle lens, preferably said front surface,
b) selectively curing said first coating composition using laser radiation or a laser beam by applying determined laser process parameters,
c) removing not cured first coating composition from said front surface and/or said back surface,
d) applying a second coating composition,
e) curing said second coating composition,
f) applying a third coating composition,
g) selectively curing said third coating composition using laser radiation or a laser beam by applying determined laser process parameters,
h) removing not cured third coating composition.

The selectively cured first coating composition of step b) forms a first surface layer of a coated spectacle lens. Even though the not cured coating composition is removed in step c) and thus the first surface layer resulting in step b) is not completely covering the front surface and/or the back surface of the spectacle lens, as the case may have been when applying the first coating composition in step a), the selectively cured first coating composition shall be regarded as first surface layer. As the not cured first coating composition is removed in step c) the second coating composition is applied to said first surface layer and said front surface and/or said back surface comprising said first surface layer. A second coating composition may also be applied to a front surface or back surface of a spectacle lens not comprising said first surface layer. Preferably, the second coating composition is applied to completely cover said front surface and/or said back surface comprising said first surface layer and optionally to completely cover a front surface or a back surface not comprising said first surface layer. After curing step e) said second coating composition results in a second surface layer. A third coating composition is applied in step f) to fully cover said second surface layer. In case a second surface layer covers said first surface layer on for example the front surface and is also comprised on for example the back surface of the spectacle lens, said third coating composition is applied to fully cover at least said second surface layer covering said first surface layer. Said third coating composition preferably is applied in step f) to fully cover said second surface layer covering said first surface layer. The selectively cured third coating composition of step g) forms a third surface layer of the coated spectacle lens. Even though the not cured coating composition is removed in step h) and thus the third surface layer resulting in step g) is not completely covering said second surface layer, the selectively cured third coating composition shall be regarded as third surface layer. In case of said first, said second and said third surface layer being on a same lens surface of the coated spectacle lens, said first, second and third surface layer together are forming or causing (i) one structure or (ii) a plurality of structures corresponding to (i) one predefined structure or (ii) a plurality of predefined structures of a digital twin of said coated spectacle lens. In case said first surface layer and said second surface layer are on a same lens surface of said coated spectacle lens while a further second surface layer and said third surface layer are on the other lens surface thereof, said first and said second surface layer together are forming or causing (i) one structure or (ii) a plurality of structures corresponding to (i) one predefined structure or (ii) a plurality of predefined structures of a digital twin of said coated spectacle lens and said further second surface layer and said third surface layer together are forming or causing (i) one structure or (ii) a plurality of structures corresponding to (i) one predefined structure or (ii) a plurality of predefined structures of a digital twin of said coated spectacle lens.

As described before the first and second coating composition may be composed of a same or a different coating composition. Reference is made to the above explanations.

Alternatively, more surface layers of a coated spectacle lens forming or causing (i) one structure or (ii) a plurality of structures preferably require at least the manufacturing steps of
- selectively curing a first coating composition using laser radiation or a laser beam by applying determined laser process parameters,
- selectively curing a second coating composition using laser radiation or a laser beam by applying determined laser process parameters.

The laser process parameters are determined such that a first surface layer of said coated spectacle lens resulting from said selectively cured first coating composition and a second surface layer of said coated spectacle lens resulting from said second coating composition together form or cause (i) one structure or (ii) a plurality of structures corresponding to (i) one predefined structure or (ii) a plurality of predefined structures of a digital twin of said coated spectacle lens. The laser process parameters are thereby considering curing characteristics of said respective first coating composition and curing characteristics of said respective second coating composition.

Optionally, more surface layers of a coated spectacle lens forming or causing (i) one structure or (ii) a plurality of structures may require an additional manufacturing step of
- applying a third coating composition.

The laser process parameters are determined such that a first surface layer of said coated spectacle lens resulting from said selectively cured first coating composition, a second surface layer of said coated spectacle lens resulting from said selectively cured second coating composition and a third surface layer resulting from said third coating composition together form or cause (i) one structure or (ii) a plurality of structures of said coated spectacle lens corresponding to (i) one predefined structure or (ii) a plurality of predefined structures of a digital twin of said coated spectacle lens. The laser process parameters are thereby considering curing characteristics of said first coating composition and said second coating composition.

In a surface layer sequence of a coated spectacle lens, said first surface layer is a surface layer next, not necessarily adjacent, to a front surface and/or a back surface of a spectacle lens and said second surface layer is a surface layer further away from a same front surface and/or a same back surface of said spectacle lens. An optional third surface layer and each optional further surface layer is a surface layer further away from a same front surface and/or a same back surface of said spectacle lens as the said second surface layer.

Preferably, said first coating composition is applied to a front surface, a back surface or to a front and back surface of a spectacle lens. Said front surface or said back surface may already comprise one or more surface layer(s). Preferably, said first coating composition is applied to fully cover said front surface and/or said back surface of said spectacle lens. Said first coating composition may be applied for example by dip coating, spin coating, or inkjet printing, preferably spin coating. The definition of "selectively curing" as well as for "applied to fully cover", both given before, shall apply.

Said second coating composition may be applied for example by dip coating, spin coating, or inkjet printing, preferably spin coating or dip coating, preferably to fully cover said first surface layer resulting from selectively curing said first coating composition and a front surface comprising said first surface layer; and/or preferably to fully cover said first surface layer resulting from selectively curing said first coating composition and a back surface comprising said first surface layer. An optional third coating composition and each optional further coating composition may be applied for example by dip coating, spin coating, or ink jet printing, preferably to fully cover said second surface layer resulting from said second coating composition. An optional third surface layer or an optional further surface layer may result from a third optional or further optional coating composition applied for example by dip coating, spin coating, or inkjet printing, preferably spin coating or dip coating, or may comprise a layer stack applied via physical vapour deposition, each to cover a respective surface layer underneath preferably fully.

Said first coating composition is
- selectively cured to result, with respect to a selectively cured part of said first coating composition, in a first surface layer. The not cured part of said first coating composition may be removed.

Said second coating composition is
- selectively cured to result, with respect to a selectively cured part of said second coating composition, in a second surface layer. The not cured part of said second coating composition may be removed.

Preferably, more surface layers of a coated spectacle lens forming or causing (i) one structure or (ii) a plurality of structures corresponding to (i) one predefined structure or (ii) a plurality of predefined structures of a digital twin of said coated spectacle lens require at least the manufacturing steps of
a) applying a first coating composition to fully cover a front surface and/or to fully cover a back surface of a spectacle lens, preferably said front surface,
b) selectively curing said first coating composition using laser radiation or a laser beam by applying determined laser process parameters,
c) removing not cured first coating composition from said front surface and/or said back surface,
d) applying a second coating composition,
e) selectively curing said second coating composition using laser radiation or a laser beam by applying determined laser process parameters,
f) removing not cured second coating composition.

The selectively cured first coating composition of step b) forms a first surface layer of a coated spectacle lens. Even though the not cured coating composition is removed in step c) and thus the first surface layer resulting in step b) is not completely covering the front surface and/or the back surface of the spectacle lens, as the case may have been when applying the first coating composition in step a), the selectively cured first coating composition shall be regarded as first surface layer. As the not cured first coating composition is removed in step c) the second coating composition is applied to said first surface layer and said front surface and/or said back surface comprising said first surface layer. A second coating composition may also be applied to a front surface or back surface of a spectacle lens not comprising said first surface layer. Preferably, the second coating composition is applied to completely cover said front surface and/or said back surface comprising said first surface layer and optionally to completely cover a front surface or a back surface not comprising said first surface layer. Said second coating composition may be selectively cured in a same position or in a same domain as said first coating composition had been selectively cured or said second coating composition may be selectively cured in a different position or in a different domain as said first coating composition had been selectively cured, each resulting in a second surface layer. Said first surface layer and said second surface layer together are forming or causing (i) one structure or (ii) a plurality of structures corresponding to (i) one predefined structure or (ii) a plurality of predefined structures of a digital twin of said coated spectacle lens.

Said first coating composition and said second composition may be composed of a same coating composition. Preferably, the same coating composition comprises identical chemical ingredients, either in identical amounts or in different amounts. Reference is made to the before detailed description of a first and second coating composition.

Even if a first surface layer resulting from said first coating composition and a second surface layer resulting from said second coating composition may differ, as mentioned before, in a position or in positions, or in a domain or in domains, said first and second surface layer together are forming or causing (i) said one structure or said (ii) plurality of structures of said coated spectacle lens.

An optional third coating composition preferably is composed of a different coating composition to said same first and second coating compositions. A resulting third surface layer preferably covers said second surface layer and a lens surface of a spectacle lens, i.e., a front surface or a back surface of said spectacle lens, comprising said first and said second surface layers.

Said first and second surface layer are preferably provided anyway in the coated spectacle lens for the additional benefits outlined above. At least one of said first and second surface layer may be an additional surface layer not provided anyway in the coated spectacle lens.

The laser process parameters power and energy summarized and defined in section 3.13 of ISO 11145:2018(E), in particular the laser process parameter peak power as defined in section 3.13.9 of ISO 11145:2018(E), preferably is/ are determined such that
- a coating composition, e.g., in before described case when (i) one structure or (ii) a plurality of structures is/are formed or caused by one surface layer, or
- a first coating composition, e.g., in before described case when (i) one structure or (ii) a plurality of structures is/are formed or caused by more surface layers,
- a first and second coating composition, e.g., in before described case when (i) one structure or (ii) a plurality of structures is/are formed or caused by more surface layers,
- a first and third coating composition, e.g., in before described case when (i) one structure or (ii) a plurality of structures is/are formed or caused by more surface layers,
is selectively cured or selectively precured.

In particular the laser process parameter peak power as defined in ISO 11145:2018(E), section 3.13.9, is determined such that (i) one predefined structure or (ii) a plurality of predefined structures of a digital twin of a coated spectacle lens, when transferred to physical reality, correspond to (i) one structure or (ii) a plurality of structures of a respective coated spectacle lens. Said coating composition or said first coating composition, each applied to fully cover a front surface and/or a back surface of a spectacle lens, said first and second coating compositions, said first and third coating compositions, each applied as described before, is/are selectively cured or selectively precured using laser radiation or a laser beam preferably with a predetermined peak power.

The following considerations for a determination of the laser parameter peak power are exemplarily
- with respect to said one coating composition or said first coating composition, each thereof composed of a same coating composition, each applied to fully cover a front surface and/or a back surface of a spectacle lens in a same thickness, whereby said front surface and/or said back surface to which said coating composition or said first coating composition is applied to is of a same lens surface,
- considering a step of removing not cured one coating composition or not cured first coating composition,
- considering discrete x,y,z positions of said front surface or said back surface of said spectacle lens which comprises said one coating composition or said first coating composition, a pattern of x,y positions preferably being adapted or selected to consider a beam diameter. in particular a beam diameter dᵤ(z), of a laser,
- considering discrete x,y,z positions of said front surface and said back surface of said spectacle lens both comprising said one coating composition or said first coating composition, pattern of x,y positions preferably being adapted or selected to consider a beam diameter, in particular a beam diameter dᵤ(z), of a laser, and a unique orientation of both patterns relative to each other:
   A) for selectively curing said one coating composition the peak power preferably is selected such that each z position of one resulting surface layer forming or causing (i) one structure or (ii) a plurality of structures corresponds in each discrete x,y position to a respective discrete z position of a respective digital twin of a coated spectacle lens. Therefore, an actual value of a height of (i) one structure or (ii) a plurality of structures formed by said one surface layer corresponds in each position to a respective target value for said height. An actual value of a layer thickness of said one surface layer causing (i) one structure or (ii) a plurality of structures corresponds in each position to a respective target value for said layer thickness. A variation of the laser process parameter peak power for selectively curing said one coating composition preferably causes no loss in height or layer thickness of the resulting one surface layer while removing not cured coating composition;
   B) for selectively precuring said one coating composition the peak power preferably is selected such that each z position of one resulting surface layer forming or causing (i) one structure or (ii) a plurality of structures corresponds in each discrete x,y position to a respective discrete z position of a respective digital twin of a coated spectacle lens. Therefore, an actual value of a height of (i) one structure or (ii) a plurality of structures formed by said one surface layer corresponds in each position to a respective target value for said height. An actual value of a layer thickness of said one surface layer causing (i) one structure or (ii) a plurality of structures corresponds in each position to a respective target value for said layer thickness. Selectively precuring said coating composition may cause a loss in height or in layer thickness of the resulting surface layer while removing not cured coating composition. Said loss is preferably considered;
   C) for selectively curing said first coating composition the peak power preferably is selected such that a resulting first surface layer and a second surface layer, as explained before, together form or cause (i) one structure or (ii) a plurality of structures, and each z position of said first and second surface layer corresponds in each discrete x,y position to a respective discrete z position of a respective digital twin of a coated spectacle lens. Therefore, an actual value of a height of (i) one structure or (ii) a plurality of structures formed by said first and second coating composition corresponds in each position to a respective target value for said height. An actual value for a layer thickness of said first surface layer and said second surface layer together forming (i) one structure or (ii) a plurality of structures corresponds in each position to a target value of said layer thickness. With respect to a height or layer thickness of said first surface layer, selectively curing a first coating composition preferably causes no loss in height or layer thickness while removing not cured first coating composition;
   D) for selectively precuring said first coating composition the peak power preferably is selected such that a resulting first surface layer and a second surface layer, as explained before, together form or cause (i) one structure or (ii) a plurality of structures, and each z position of said first and second surface layer corresponds in each discrete x,y position to a respective discrete z position of a respective digital twin of a coated spectacle lens. Therefore, an actual value of a height of (i) one structure or (ii) a plurality of structures formed by said first and second coating composition corresponds in each position to a respective target value for said height. An actual value for a layer thickness of said first surface layer and said second surface layer together forming (i) one structure or (ii) a plurality of structures corresponds in each position to a target value of said layer thickness. With respect to a height or layer thickness of said first surface layer, selectively precuring a first coating composition may cause a loss in height or layer thickness while removing not cured first coating composition. Said loss is preferably considered.

Summarising, the laser parameter peak power mainly affects a curing level of said one coating composition or said first coating composition and hence, after removing not cured one coating composition or first coating composition, a height or layer thickness of a resulting surface layer or first surface layer. The lower the peak power is the lower the curing level is and thus the higher a loss in height or layer thickness is in one resulting surface layer or first surface layer after removing not cured one coating composition or first coating composition.

When determining laser process parameters to achieve (i) one predefined structure or (ii) a plurality of predefined structures of a digital twin of a coated spectacle lens, it is preferably considered that while applying said determined laser process parameters to a coating composition, laser process parameters may influence each other. For example, for a setting of the before described laser process parameter peak power the laser process parameter scan speed preferably is considered. The higher the peak power shall be determined, the higher the scan speed may be, the lower the peak power shall be, the lower the scan speed may be for obtaining a same curing level.

The laser parameter pulse repetition rate as defined in ISO 11145:2018(E), section 3.14.3, preferably is determined such that
- one coating composition, e.g., in before described case when (i) one structure or (ii) a plurality of structures is/are formed or caused by one surface layer, or
- a first coating composition, e.g., in before described case when (i) one structure or (ii) a plurality of structures is/are formed or caused by more surface layers,
- a first and second coating composition, e.g., in before described case when (i) one structure or (ii) a plurality of structures is/are formed or caused by more surface layers,
- a first and third coating composition, e.g., in before described case when (i) one structure or (ii) a plurality of structures is/are formed or caused by more surface layers,
is/are selectively cured or selectively precured.

Said (i) one structure or (ii) said plurality of structures correspond to (i) one predefined structure or (ii) a plurality of predefined structures of a respective digital twin of a coated spectacle lens. Said one coating composition or said first coating composition, each applied to fully cover a front surface and/or a back surface of a spectacle lens, said first and second coating compositions, said first and third coating compositions, each applied as described before, is/are selectively cured or selectively precured using laser radiation or a laser beam preferably in a predetermined pulse repetition rate. The following considerations for a determination of the laser parameter pulse repetition rate are exemplarily
- with respect to said one coating composition or said first coating composition, each thereof composed of a same coating composition, each applied to fully cover a front surface and/or a back surface of a spectacle lens in a same thickness, whereby said front surface and/or said back surface to which said one coating composition or said first coating composition is applied to is of a same lens surface,
- considering a step of removing not cured one coating composition or not cured first coating composition
- considering discrete x,y,z positions of said front surface or said back surface of said spectacle lens which comprises said one coating composition or said first coating composition, a pattern of x,y positions preferably being adapted or selected to consider a beam diameter, in particular a beam diameter dᵤ(z), of a laser,
- considering discrete x,y,z positions of said front surface and said back surface of said spectacle lens both comprising said one coating composition or said first coating composition, a pattern of x,y positions preferably being adapted or selected to consider a beam diameter, in particular a beam diameter dᵤ(z), of a laser, and a unique orientation of both patterns relative to each other:
   (A) a pulse repetition rate is determined such that one coating composition is selectively cured or selectively precured and such that a surface of one resulting surface layer forming or causing (i) one structure or (ii) a plurality of structures corresponds to (i) one predefined structure or (ii) a plurality of predefined structures of a respective digital twin of a coated spectacle lens;
   (B) a pulse repetition rate is determined such that a first coating composition is selectively cured or selectively precured and such that a resulting first surface layer together with a second surface layer form or cause (i) one structure or (ii) a plurality of structures whose surface(s) correspond to a surface of (i) one predefined structure or to surfaces of each of (ii) a plurality of predefined structures of a respective digital twin of a coated spectacle lens.

Summarising, the laser parameter pulse repetition rate mainly affects a curing level of said one coating composition or said first coating composition and hence, after removing not cured one coating composition or first coating composition, a height or layer thickness of a resulting surface layer or first surface layer. The higher the pulse repetition rate the less the curing level of said coating composition is.

In a preferred embodiment of the invention, the manufacturing comprises the step of
- applying determined laser process parameters such as at least one of
   ∘ a spatial variation in z direction in the setting of said one laser process parameter or said more laser process parameters,
   ∘ the spatial variation in x,y direction in the setting of said one laser process parameter or said more laser process parameters,
      achieves (i) one structure or a (ii) plurality of structures or (iii) a same structure out of said plurality of structures.

A surface normal at either an apex of a front surface of a spectacle lens or an apex of a back surface of a spectacle lens shall define an origin of an x,y,z coordinate system and a "z direction".

An "x,y direction" shall be in a tangential plane to either said front surface at the apex or said back surface at the apex. An x direction and a y direction shall be perpendicular to each other in said tangential plane.

Instead of the surface normal at the apex of the front surface or instead of the surface normal at the apex of the back surface an optical centre of the spectacle lens may define an origin of the x,y,z coordinate system and a surface normal at the optical centre may define a z direction. The optical centre of a spectacle lens is as defined in ISO 13666:2019(E), section 3.2.15, an intersection of the optical axis (3.1.8) with the front surface (3.2.13) of a lens (3.5.2). The x,y direction then is in the tangential plane to said intersection with the front surface. In said tangential plane the x direction and the z direction are perpendicular to each other.

In case a front surface or a back surface of a spectacle lens is for example a power-variation surface or another surface without an unambiguously definably apex, preferably a surface normal at a fitting point of the spectacle lens shall define the origin of the x,y,z coordinate system and a primary direction may define a z direction. The fitting point of a spectacle lens is as defined in ISO 13666:2019(E), section 3.2.34, a point on the front surface (3.2.13) of a lens (3.5.2) or blank (3.8.1) stipulated by the manufacturer for positioning the lens in front of the eye. The primary direction of a spectacle lens is as defined in ISO 13666:2019(E), section 3.2.25, a direction of the line of sight (3.2.24), usually taken to be the horizontal, to an object at an infinite distance measured with habitual head and body posture when looking straight ahead in unaided vision. In that case, the x,y direction is in the plane perpendicular to said primary direction. In said plane perpendicular to said primary direction the x direction and the y direction are perpendicular to each other.

The before given explanations, in particular with respect to the spatial variation, shall apply accordingly.

In a preferred embodiment of the invention, the manufacturing comprises the step of
- applying determined laser process parameters such as to stepwise achieve at least one of
   a. (i) one structure,
   b. a (ii) plurality of structures,
   c. a (iii) same structure out of said plurality of structures.

The before given explanations, in particular with respect to "stepwise", shall apply accordingly.

In a preferred embodiment of the invention, the manufacturing comprises the step of
- applying the determined laser process parameters such as to achieve a surface power of at least one of
   a. (i) one structure,
   b. each structure of a (ii) plurality of structures,
   c. a (iii) same structure out of said plurality of structures,

   which is different to a surface power of a lens surface
      - comprising at least one of said (i) one structure, said (ii) plurality of structures and said (iii) same structure out of said plurality of structures,
      - outside a position or a domain occupied by said at least one of said (i) one structure, said (ii) plurality of structures and said (iii) same structure out of said plurality of structures,
   within at least one of the following ranges:
      A. the difference in surface power being within a range of 0.25 dioptres to 50 dioptres;
      B. the difference in surface power being within a range of 1 dioptre to 25 dioptres;
      C. the difference in surface power being within a range of 2 dioptres to 20 dioptres;
      D. the difference in surface power being within a range of 5 dioptres to 12 dioptres.

The before given definitions, in particular with respect to the surface power, shall apply accordingly.

In a preferred embodiment of the invention, the manufacturing comprises the step of
- applying determined laser process parameters such as to achieve a secondary structure along a respective surface of at least one of
   a. (i) one structure,
   b. each structure of a (ii) plurality of structures,
   c. a (iii) same structure out of said plurality of structures.

Said secondary structure may modify a surface, preferably in the sense of surface shape, form, or topography, selected or pieced together from at least one of the before, with respect to (i) one structure or a (ii) plurality of structures, mentioned surfaces.

Said secondary structure may be periodic or non-periodic.

Said secondary structure may cause that a surface of at least one of said (i) one structure, each structure of a (ii) plurality of structures, a (iii) same structure out of said plurality of structures, deviates from a, with respect to a digital twin of a coated spectacle lens, predefined surface. Said surface deviation may be in a direction perpendicular to a tangential plane in a discrete x,y,z position in a range of 5 nm to one tenth of a domain of one structure or in a range of 5 nm to 1 one tenth of a maximum z position of one structure.

In a further preferred embodiment of the invention, the method comprises a measurement and calculation step. The measurement step comprises measurement of a coated spectacle lens or a part of a coated spectacle comprising (i) one structure or a (ii) plurality of structures by white light interferometry.

The method is characterized in the steps of
- determining discrete z positions along one straight line along one x,y direction of at least one of
   ∘ i) one structure,
   ∘ each structure of a (ii) plurality of structures and
   ∘ a (iii) same structure out of said plurality of structures,
   each having a spherical target curvature along said one straight line along said x,y direction,
- determining from these discrete z positions a slope at each discrete x,y position along said one x,y direction, wherein a change of the slope along said one x,y direction deviates from a linear change of a slope of said target spherical curvature.

A spherical target curvature preferably shall define a curvature being spherical along one straight line along one x,y direction of a surface selected or pieced together from the before mentioned ones.

Said deviation from a linear change of a slope of said target spherical curvature is an indication for a secondary structure along a surface of at least one of said (i) one structure, each structure of said (ii) plurality of structures and said (iii) same structure out of said plurality of structures. This indication might be useful in case a resolution of a measuring device is not sufficient to reveal secondary structures.

In a preferred embodiment of the invention, the manufacturing comprises the step of
- applying (a) one additional coating composition or (b) more additional coating compositions to (i) one structure or a (ii) plurality of structures.

In case one additional coating composition or said more additional coating result in a second surface layer, a third surface layer, a fourth surface layer or a further surface layer, reference is made to the before given explanations. At least one additional coating layer resulting from said one additional coating composition or said more additional coating compositions preferably is selected from the group consisting of a hard coating surface layer, hard coating as defined in ISO 13666:2019(E), section 3.18.2; an anti-reflective coating surface layer, anti-reflective coating as defined in ISO 13666:2019(E), section 3.18.3; a clean coating surface layer, clean coating as defined in

ISO 13666:2019(E), section 3.18.4; a hydrophobic coating surface layer, hydrophobic coating as defined on ISO 13666:2019(E), section 3.18.5; a hydrophilic coating surface layer, hydrophilic coating as defined in ISO 13666:2019(E), section 3.18.6; an anti-fog coating surface layer, anti-fog coating as defined in ISO 13666:2019(E), section 3.18.7; an anti-static coating surface layer, anti-static coating as defined in ISO 13666:2019(E), section 3.18.8.

In a preferred embodiment of the invention, the manufacturing comprises the step of
- applying the determined laser process parameters, considering (a) one additional coating composition or (b) more additional coating compositions, such as to achieve a surface power of at least one of
   a. (i) one structure,
   b. each structure of a (ii) plurality of structures,
   c. a (iii) same structure out of said plurality of structures,

   which is different to a surface power of a lens surface
      - comprising said (i) one structure, said (ii) plurality of structures, said (iii) same structure out of said plurality of structures,
      - outside a position or a domain occupied by said at least one of said (i) one structure, said (ii) plurality of structures and said (iii) same structure out of said plurality of structures,
   within at least one of the following ranges:
      A. the difference in surface power being within a range of 0.25 dioptres to 25 dioptres;
      B. the difference in surface power being within a range of 1 dioptre to 25 dioptres;
      C. the difference in surface power being within a range of 2 dioptres to 20 dioptres;
      D. the difference in surface power being within a range of 5 dioptres to 12 dioptres.

The before provided definitions and explanations shall apply accordingly.

The method for manufacturing a coated spectacle lens, one surface layer or more surface layers comprising (i) one structure or (ii) a plurality of structures, the method is characterized in the step of
- selectively curing one coating composition or more coating compositions on a surface of a spectacle lens, using laser radiation, the laser radiation as defined in ISO 11145:2018(E), section 3.19.4, or a laser beam, the laser beam as defined in ISO 11145:2018(E), section 3.19.5, to result in said one surface layer or said more surface layers on said surface of said spectacle lens, said one surface layer or said more surface layers comprising said (i) one structure or said (ii) plurality of structures.

Preferably, the method for manufacturing a coated spectacle lens, one surface layer or more surface layers comprising (i) one structure or (ii) a plurality of structures, the method is characterized in that said one coating composition or said more said coating compositions is/are fully covering said surface of said spectacle lens.

Preferably, the method for manufacturing a coated spectacle lens, one surface layer or more surface layers comprising (i) one structure or (ii) a plurality of structures, the method is characterized in the step of
- removing not cured coating composition(s) from said surface of said spectacle lens.

Preferably, the method for manufacturing a coated spectacle lens, one surface layer or more surface layers comprising (i) one structure or (ii) a plurality of structures, the method is characterized in that said one surface layer or said more surface layers is/are forming or causing said (i) one structure or said (ii) plurality of structures.

Preferably, the method for manufacturing a coated spectacle lens, one surface layer or more surface layers comprising (i) one structure or (ii) a plurality of structures, the method is characterized in that said laser radiation or said laser beam is applied according to laser process parameters such as at least one of
∘ a spatial variation in z direction in a setting of one laser process parameter or more laser process parameters,
∘ a spatial variation in x,y direction in a setting of one laser process parameter or more laser process parameters,
achieves said (i) one structure or said (ii) plurality of structures or (iii) a same structure out of said plurality of structures.

Preferably, the method for manufacturing a coated spectacle lens, one surface layer or more surface layers comprising (i) one structure or (ii) a plurality of structures, the method is characterized in that said laser process parameters are applied stepwise to achieve at least one of
a. said (i) one structure,
b. said (ii) plurality of structures,
c. said (iii) same structure out of said plurality of structures.

Preferably, the method for manufacturing a coated spectacle lens, one surface layer or more surface layers comprising (i) one structure or (ii) a plurality of structures, the method is characterized in that said laser process parameters are applied such as to achieve a surface power of at least one of
a. said (i) one structure,
b. each structure of said (ii) plurality of structures,
c. said (iii) same structure out of said plurality of structures,

which is different to a surface power of a lens surface
   - comprising at least one of said (i) one structure, said (ii) plurality of structures and said (iii) same structure out of said plurality of structures,
   - outside a position or a domain occupied by said at least one of said (i) one structure, said (ii) plurality of structures and said (iii) same structure out of said plurality of structures,
within at least one of the following ranges:
   A. the difference in surface power being within a range of 0.25 dioptres to 50 dioptres;
   B. the difference in surface power being within a range of 1 dioptre to 25 dioptres;
   C. the difference in surface power being within a range of 2 dioptres to 20 dioptres;
   D. the difference in surface power being within a range of 5 dioptres to 12 dioptres.

Preferably, the method for manufacturing a coated spectacle lens, one surface layer or more surface layers comprising (i) one structure or (ii) a plurality of structures, the method is characterized in that said laser process parameters are applied such as to achieve a secondary structure along a respective surface of at least one of
a. said (i) one structure,
b. each structure of said (ii) plurality of structures,
c. said (iii) same structure out of said plurality of structures.

Preferably, the method for manufacturing a coated spectacle lens, one surface layer or more surface layers comprising (i) one structure or (ii) a plurality of structures, the method is characterized in the steps of
- determining discrete z positions along one straight line along one x,y direction of at least one of
   ∘ said (i) one structure,
   ∘ each structure of said (ii) plurality of structures and
   ∘ said (iii) same structure out of said plurality of structures, each having a spherical target curvature along said one straight line along said x,y direction,
- determining from these discrete z positions a slope at each discrete x,y position along said one x,y direction, wherein a change of the slope along said one x,y direction deviates from a linear change of a slope of said target spherical curvature.

Preferably, the method for manufacturing a coated spectacle lens, one surface layer or more surface layers comprising (i) one structure or (ii) a plurality of structures, the method is characterized in that the manufacturing comprises the step of
- applying (a) one additional coating composition or (b) more additional coating compositions.

Preferably, the method for manufacturing a coated spectacle lens, one surface layer or more surface layers comprising (i) one structure or (ii) a plurality of structures, the method is characterized in that the manufacturing comprises the step of
- applying the determined laser process parameters such as to achieve a surface power of at least one of
   a. said (i) one structure,
   b. each structure of said (ii) plurality of structures,
   c. said (iii) same structure out of said plurality of structures,
   which is different to a surface power of a lens surface
- comprising said (i) one structure, said (ii) plurality of structures, said (iii) same structure out of said plurality of structures,
- outside a position or a domain occupied by said at least one of said (i) one structure, said (ii) plurality of structures and said (iii) same structure out of said plurality of structures,
within at least one of the following ranges:
A. the difference in surface power being within a range of 0.25 dioptres to 25 dioptres;
B. the difference in surface power being within a range of 1 dioptre to 25 dioptres;
C. the difference in surface power being within a range of 2 dioptres to 20 dioptres;
D. the difference in surface power being within a range of 5 dioptres to 12 dioptres.

With respect to the method for manufacturing a coated spectacle lens and with respect to the preferable embodiment of the method for manufacturing a coated spectacle lens, before provided definitions and explanations shall apply accordingly.

In a preferred embodiment of the invention, a computer program comprises instructions which, when the program is executed by a computer, cause the computer to carry out the before described method configured for designing a digital twin of a spectacle lens for the purpose of manufacturing the spectacle lens.

Said computer program may be stored on a non-transitory tangible computer-readable storage medium, the computer program comprising instructions which, when the program is executed by a computer, cause the computer to carry out the above-described method configured for designing a digital twin of a spectacle lens for the purpose of manufacturing the spectacle lens.

In a preferred embodiment of the invention, a computer-readable storage medium having stored thereon the computer program. Said computer-readable storage medium may be a non-transitory tangible computer-readable storage medium.

The invention is described in the following at hands of examples not limiting the scope of the invention: The coated spectacle lenses presented in the following part were prepared with a 3-axis UV marker laser (KEYENCE), with a laser radiation wavelength of 355 nm, a laser beam diameter of 25 µm, and a laser peak power at 100% 2.5 watt.

The UV curable coating composition deposited on top of a lens surface of a spectacle lens is based on pentaerythritol tetra acrylate (99 wt.%, Sigma Aldrich) and triaryl sulfonium hexafluorophosphate (1 wt.%, Sigma Aldrich). To achieve a desired thickness, 1-methoxy-2-proponal (30 wt.% in final coating composition) was added and formed as a homogeneous mixture.

The selective curing of the coating composition followed predefined structures designed by the laser integrated Logo designer. A co-central multiple ring-shaped structure with a ring-ring distance of 1 mm, and varied ring widths were designed. On the same lens surface deposited with coating composition, one or more designed structures can be used to generate desired structures for surface power.

The procedure for the selective curing is:
1) Clean or activate a lens substrate with or without a coating (Rx lens or semi-finished blanks)
2) Deposit the coating composition via a spin-coating process, non-cured or only partially cured
3) Select a predefined structure to be achieved by selectively curing the coating composition
4) Set up laser process parameters, such as peak power, pulse repetition rate, and scan speed
5) selective cure the coating composition
6) If necessary, repeat 3) to 5) one or more times
7) Rinse lens substrate with organic solvents or aqueous water solutions

For the following samples, lens substrate CR39 (diameter 65 mm, refractive index 1.5) was cleaned in distilled water and dried with hot air. Then, the UV-curable coating composition was deposited on top of it via spin-coating at 3000 rpm/s for 30 s. After applying laser radiation, the lens substrate was rinsed with acetone for 30 seconds. The selectively cured surface layer was overcoated with a hard coating composition and further processed at 110°C for 1 hour to cure the hard coating layer. Characterizations of generated structures were performed via the white-light scattering microscope of Zygo Corporation, USA and surface profilometer (Surfcom 3DF, surface texture measuring Instrument, ACCRETECH, Japan).

Example 1: Based on the coating composition deposited lens surface, laser radiation was performed on wet lens surface twice continuously (without moving lens substrate, processing time 180 seconds): first run following a multiple ring-shaped structure of 0.35 mm width, with laser process parameters of peak power 100%, pulse repetition rate of 200 kHz, scan speed of 500 mm/s, while the second run following the same multiple ring-shaped structure of 0.35 mm width, with laser process parameters of peak power 100%, pulse repetition rate of 40 kHz, scan speed of 500 mm/s.

Example 2: Based on the coating composition deposited lens surface, laser radiation was performed on wet lens surface twice continuously (without moving lens substrate): first run following a multiple ring-shaped pattern of 0.35 mm width, with laser process parameters of peak power 100%, pulse repetition rate of 200 kHz, scan speed of 500 mm/s, while the second run following the same multiple ring-shaped structure of 0.35 mm width, with laser process parameters of peak power 75%, pulse repetition rate of 40 kHz, scan speed of 500 mm/s.

Example 3: Based on the coating composition deposited lens surface, laser radiation was performed on wet lens surface twice continuously (without moving lens substrate): first run following a multiple ring-shaped structure of 0.35 mm width, with laser process parameters of peak power 100%, pulse repetition rate of 400 kHz, scan speed of 500 mm/s, while the second run following the same multiple ring-shaped structure of 0.35 mm width, with laser process parameters of peak power 100%, pulse repetition rate of 40 kHz, scan speed of 500 mm/s.

Example 4: Based on the coating composition deposited lens surface, laser radiation was performed on wet lens surface twice continuously (without moving lens substrate): first run following a multiple ring-shaped structure of 0.10 mm width, with laser process parameters of peak power 50%, pulse repetition rate of 400 kHz, scan speed of 500 mm/s, while the second run following the same multiple ring-shaped structure of 0.35 mm width, with laser process parameters of peak power 100%, pulse repetition rate of 40 kHz, scan speed of 500 mm/s.

Example 5: Based on the coating composition deposited lens surface, laser radiation was performed on wet lens surface three times continuously (without moving lens substrate): first run following a multiple ring-shaped structure of 0.20 mm width, with laser process parameters of peak power 100%, pulse repetition rate of 200 kHz, scan speed of 500 mm/s, while the second run following the same multiple ring-shaped structure of 0.35 mm width, with laser process parameters of peak power 50%, pulse repetition rate of 400 kHz, scan speed of 500 mm/s, and the third run following the same multiple ring-shaped structure of 0.35 mm width, with laser process parameters of peak power 100%, pulse repetition rate of 40 kHz, scan speed of 500 mm/s.

Example 6: Based on the coating composition deposited lens surface, laser radiation was performed on wet lens surface twice continuously (without moving lens substrate): first run following a multiple ring-shaped structure of 0.35 mm width, with laser process parameters of peak power 50%, pulse repetition rate of 400 kHz, scan speed of 500 mm/s, while the second run following the same multiple ring-shaped structure of 0.35 mm width, with laser process parameters of peak power 100%, pulse repetition rate of 40 kHz, scan speed of 500 mm/s.
Figure 1 schematically shows different structures obtained by a selectively cured a first surface layer (left hand side of (a) to (e)), overcoated with a second surface layer (right hand side of (a) to (e) on a lens surface.
Figure 2 shows a surface profile (a) of the coated spectacle lens of examples 1 and a surface profile (b) of the coated spectacle lens of example 2, each before the application and curing of the hard coating. The surfaces profiles of the structures are rather flat with little curvature.
Figure 3 shows the surface profile (a) of the coated spectacle lens of example 1 and a surface profile (b) of the coated spectacle lens of example 2, each with the hard coating surface layer. The surface profiles of the structures are smoothed and rounded, with a certain curvature.
Figure 4 shows the simulated surface power of the structures of figure 3, for the coated spectacle lenses of example 1 and 2, each overcoated with a hard coating surface layer. The surface power is calculated from the slope of surface curvature (with hard coating surface layer). Both show a surface power of 2-3 dioptre.
Figure 5 shows the surface profile (a) of the coated spectacle lens of example 3 and (b) of the coated spectacle lens of example 4. With respect to the surface profiles of figure 1, the surfaces profiles changed from flat to staircase.
Figure 6 shows the surface profile (a) of the coated spectacle lens of example 4 and (b) of the coated spectacle lens of example 5.
Figure 7 shows the simulated surface power of the structures. The surface power is calculated from the slope of surface curvature (with hard coating surface layer). The surface power increased from (a) with 2.5 dioptres (coated spectacle lens of example 2), to (b) with 5 dioptres (coated spectacle lens of example 6), to (c) with 10 dioptres (coated spectacle lens of example 5).

## Claims

1. Method for designing a digital twin of a coated spectacle lens by means of a computer for the purpose of a use of the digital twin for manufacturing the coated spectacle lens, said digital twin of said coated spectacle lens comprising (i) one predefined structure or (ii) a plurality of predefined structures,
said digital twin of said coated spectacle lens describing the coated spectacle lens being computer-readable data additionally containing manufacturing instructions considering laser process parameters to achieve said (i) one predefined structure or (ii) said plurality of predefined structures, a structure of said digital twin of said coated spectacle lens being a domain on a lens surface of said digital twin of said coated spectacle lens, said domain being part of one surface layer of more surface layers digitally added to a front surface and/or a back surface of a digital twin of a spectacle lens, or
a structure of said digital twin of said coated spectacle lens being a domain of a lens surface of said digital twin of said coated spectacle lens, said domain being caused by one surface layer or more surface layers digitally added to a front surface and/or a back surface of a digital twin of a spectacle lens,
the method further comprising the step of
- determining said laser process parameters based on curing characteristics of a coating composition, a refractive index of a material of the structure being a uniform refractive index.

2. Method according to claim 1, the method being **characterized in**
- determining said laser process parameters such as to comprise at least one of
∘ a spatial variation in z direction of a setting of one laser process parameter or more laser process parameters,
∘ a spatial variation in x,y direction of a setting of one laser process parameter or more process laser parameters,
each to achieve said (i) one predefined structure or said (ii) plurality of predefined structures or (iii) a same predefined structure out of said plurality of predefined structures.

3. Method according to any one of the preceding claims, the method being **characterized in**
- revising laser process parameters by manufacturing the coated spectacle lens
∘ to confirm said laser process parameters or
∘ to redetermine laser process parameters based on curing characteristics to achieve said (i) one predefined structure or said (ii) a plurality of predefined structures or said (iii) same predefined structure out of said plurality of predefined structures.

4. Method according to any one of the preceding claims, the method being **characterized in**
- determining said laser process parameters such as to stepwise achieve at least one of
∘ said (i) one predefined structure,
∘ said (ii) plurality of predefined structures,
∘ when referred to claim 2 or claim 3, said (iii) same predefined structure out of said plurality of predefined structures.

5. Method according to any one of the preceding claims, the method comprising the step of manufacturing said coated spectacle lens based on said designed digital twin.

6. Method according to claim 5, **characterized in that** the manufacturing comprises the step of
- selectively curing the coating composition by applying the determined laser process parameters to achieve (i) one structure or a (ii) plurality of structures corresponding to said (i) one predefined structure or said (ii) plurality of predefined structures.

7. Method according to claim 6, **characterized in that** the manufacturing comprises the step of
- applying the determined laser process parameters such as at least one of
∘ the spatial variation in z direction in the setting of said one laser process parameter or said more laser process parameters,
o the spatial variation in x,y direction in the setting of said one laser process parameter or said∘ more laser process parameters,
achieves said (i) one structure or said (ii) plurality of structures or (iii) a same structure out of said plurality of structures.

8. Method according to any one of the preceding claims 6 and 7, **characterized in that** the manufacturing comprises the step of
- applying the determined laser process parameters such as to stepwise achieve at least one of
a. said (i) one structure,
b. said (ii) plurality of structures,
c. when referred to claim 7, said (iii) same structure out of said plurality of structures.

9. Method according to any one of the preceding claims 6 to 8, **characterized in that** the manufacturing comprises the step of
- applying the determined laser process parameters such as to achieve a surface power of at least one of
a. said (i) one structure,
b. each structure of said (ii) plurality of structures,
c. when referred to claim 7 and to claim 8, said (iii) same structure out of said plurality of structures,
which is different to a surface power of a lens surface
- comprising at least one of said (i) one structure, said (ii) plurality of structures and said (iii) same structure out of said plurality of structures,
- outside a position or a domain occupied by said at least one of said (i) one structure, said (ii) plurality of structures and said (iii) same structure out of said plurality of structures,
within at least one of the following ranges:
A. the difference in surface power being within a range of 0.25 dioptres to 50 dioptres;
B. the difference in surface power being within a range of 1 dioptre to 25 dioptres;
C. the difference in surface power being within a range of 2 dioptres to 20 dioptres;
D. the difference in surface power being within a range of 5 dioptres to 12 dioptres.

10. Method according to any one of the preceding claims 6 to 9, **characterized in that** the manufacturing comprises the step of
- applying the determined laser process parameters such as to achieve a secondary structure along a respective surface of at least one of
a. said (i) one structure,
b. each structure of said (ii) plurality of structures,
c. when referred to claims 7 to 9, said (iii) same structure out of said plurality of structures.

11. Method according to claim 10, **characterized in** the steps of
- determining discrete z positions along one straight line along one x,y direction of at least one of
∘ said (i) one structure,
∘ each structure of said (ii) plurality of structures and
∘ said (iii) same structure out of said plurality of structures,
each having a spherical target curvature along said one straight line along said x,y direction,
- determining from these discrete z positions a slope at each discrete x,y position along said one x,y direction, wherein a change of the slope along said one x,y direction deviates from a linear change of a slope of said target spherical curvature.

12. Method according to any one of the preceding claims 6 to 11, **characterized in that** the manufacturing comprises the step of
- applying (a) one additional coating composition or (b) more additional coating compositions.

13. Method according to claim 12, **characterized in that** the manufacturing comprises the step of
- applying the determined laser process parameters such as to achieve a surface power of at least one of
a. said (i) one structure,
b. each structure of said (ii) plurality of structures,
c. said (iii) same structure out of said plurality of structures,
which is different to a surface power of a lens surface
- comprising said (i) one structure, said (ii) plurality of structures, said (iii) same structure out of said plurality of structures,
- outside a position or a domain occupied by said at least one of said (i) one structure, said (ii) plurality of structures and said (iii) same structure out of said plurality of structures,
within at least one of the following ranges:
A. the difference in surface power being within a range of 0.25 dioptres to 25 dioptres;
B. the difference in surface power being within a range of 1 dioptre to 25 dioptres;
C. the difference in surface power being within a range of 2 dioptres to 20 dioptres;
D. the difference in surface power being within a range of 5 dioptres to 12 dioptres.

14. Computer being configured to perform the step of
- determining laser process parameters to achieve (i) one predefined structure or (ii) a plurality of predefined structures of a digital twin of a coated lens,
a structure of said digital twin of said coated spectacle lens being a domain on a lens surface of said digital twin of said coated spectacle lens, said domain being part of one surface layer of more surface layers digitally added to a front surface and/or a back surface of a digital twin of a spectacle lens, or
a structure of said digital twin of said coated spectacle lens being a domain of a lens surface of said digital twin of said coated spectacle lens, said domain being caused by one surface layer or more surface layers digitally added to a front surface and/or a back surface of a digital twin of a spectacle lens,
a refractive index of a material of the structure being a uniform refractive index,
and at least one selected from the group consisting of a laser as defined in ISO 11145:2018(E), section 3.19.1, a laser device as defined in ISO 11145:2018(E), section 3.19.6, a laser assembly as defined in ISO 11145:2018(E), section 3.19.7 and a laser unit as defined in ISO 11145:2018(E), section 3.19.8.

15. Computer program comprising instructions which, when the program is executed by a computer, cause the computer to carry out the method of any one of claims 1 to 4.

16. Computer-readable storage medium having stored thereon the computer program of claim 15.

## Patentansprüche

1. Verfahren zum Designen eines digitalen Zwillings eines beschichteten Brillenglases mittels eines Computers zum Zwecke einer Verwendung des digitalen Zwillings zum Herstellen des beschichteten Brillenglases, der digitale Zwilling umfasst dabei (i) eine vordefinierte Struktur oder (ii) eine Vielzahl von vordefinierten Strukturen,
wobei der digitale Zwilling des beschichteten Brillenglases, der das beschichtete Brillenglas beschreibt, computerlesbare Daten ist, die zusätzlich Herstellungsanweisungen beinhalten, die Laserprozessparameter berücksichtigen, um die (i) eine vordefinierte Struktur oder (ii) die Vielzahl von vordefinierten Strukturen zu erzielen, wobei eine Struktur des digitalen Zwillings des beschichteten Brillenglases eine Domäne auf der Glasfläche des digitalen Zwillings des beschichteten Brillenglases ist, wobei die Domäne Teil einer Oberflächenschicht von mehreren Oberflächenschichten ist, die digital zu einer Vorderfläche und/oder einer Rückfläche eines digitalen Zwillings eines Brillenglases hinzugefügt werden, oder
wobei eine Struktur des digitalen Zwillings des beschichteten Brillenglases eine Domäne von einer Glasfläche des digitalen Zwillings des beschichteten Brillenglases ist, wobei die Domäne verursacht wird durch eine Oberflächenschicht oder mehrere Oberflächenschichten, die digital zu einer Vorderfläche und/oder einer Rückfläche eines digitalen Zwillings eines Brillenglases hinzugefügt werden, wobei das Verfahren ferner den folgenden Schritt umfasst von
- Bestimmen von Laserprozessparametern auf der Grundlage von Aushärtungscharakteristika einer Beschichtungszusammensetzung, eines Brechungsindexes eines Materials der Struktur, der ein einheitlicher Brechungsindex ist.

2. Verfahren nach Anspruch 1, wobei das Verfahren **gekennzeichnet ist durch**
- Bestimmen der Laserprozessparameter, um mindestens einen zu umfassen von
∘ einer räumlichen Variation in z-Richtung einer Einstellung eines Laserprozessparameters oder mehrerer Laserprozessparameter,
∘ einer räumlichen Variation in x, y-Richtung einer Einstellung eines Laserprozessparameters oder mehrerer Laserprozessparameter,
zum jeweiligen Erzielen der (i) einen vordefinierten Struktur oder der (ii) Vielzahl von vordefinierten Struktur oder (iii) einer selben vordefinierten Struktur aus der Vielzahl von vordefinierten Strukturen.

3. Verfahren nach einem der vorhergehenden Ansprüche, wobei das Verfahren **gekennzeichnet ist durch**
- Überarbeiten von Laserprozessparametern durch Herstellen des beschichteten Brillenglases
∘ zum Bestätigen der Laserprozessparameter oder
∘ zum Neubestimmen von Laserprozessparametern auf der Grundlage von Aushärtungscharakteristika zum Erzielen der (i) einen vordefinierten Struktur oder der (ii) einen Vielzahl von vordefinierten Strukturen oder der (iii) selben vordefinierten Struktur aus der Vielzahl von vordefinierten Strukturen.

4. Verfahren nach einem der vorhergehenden Ansprüche, wobei das Verfahren **gekennzeichnet ist durch**
- Bestimmen der Laserprozessparameter zum schrittweisen Erzielen von mindestens einem von
∘ der (i) einen vordefinierten Struktur,
∘ der (ii) Vielzahl von vordefinierten Strukturen,
∘ wenn auf Anspruch 2 oder Anspruch 3 bezogen, der (iii) selben vordefinierten Struktur aus der Vielzahl von vordefinierten Strukturen.

5. Verfahren nach einem der vorhergehenden Ansprüche, wobei das Verfahren den Schritt umfasst von Herstellen des beschichteten Brillenglases auf der Grundlage des designten digitalen Zwillings.

6. Verfahren nach Anspruch 5, **dadurch gekennzeichnet, dass** die Herstellung den Schritt umfasst von
- selektivem Aushärten der Beschichtungszusammensetzung durch Anwenden der bestimmten Laserprozessparameter zum Erzielen (i) einer Struktur oder einer (ii) Vielzahl von Strukturen, korrespondierend mit der (i) einen vordefinierten Struktur oder der (ii) Vielzahl von vordefinierten Strukturen.

7. Verfahren nach Anspruch 6, **dadurch gekennzeichnet, dass** die Herstellung den Schritt umfasst von
- Anwenden der bestimmten Laserprozessparameter, wie etwa mindestens einem von
∘ einer räumlichen Variation in z-Richtung bei der Einstellung des einen Laserprozessparameters oder der mehreren Laserprozessparameter,
∘ der räumlichen Variation in x, y-Richtung bei der Einstellung des einen Laserprozessparameters oder der mehreren Laserprozessparameter,
erzielt die (i) eine Struktur oder die (ii) Vielzahl von Strukturen oder (iii) eine selbe Struktur aus der Vielzahl von Strukturen.

8. Verfahren nach einem der vorhergehenden Ansprüche 6 und 7, **dadurch gekennzeichnet, dass** die Herstellung den Schritt umfasst von
- Anwenden der bestimmten Laserprozessparameter, wie etwa zum schrittweisen Erzielen mindestens eines von
a. der (i) einen Struktur,
b. der (ii) Vielzahl von Strukturen,
c. wenn auf Anspruch 7 bezogen, der (iii) selben Struktur aus der Vielzahl von Strukturen.

9. Verfahren nach einem der vorhergehenden Ansprüche 6 bis 8, **dadurch gekennzeichnet, dass** die Herstellung den Schritt umfasst von
- Anwenden der bestimmten Laserprozessparameter, wie etwa zum Erzielen eines Flächenbrechwerts von mindestens einem von
a. der (i) einen Struktur,
b. jeder Struktur der (ii) Vielzahl von Strukturen,
c. wenn auf Anspruch 7 und auf Anspruch 8 bezogen, der (iii) selben Struktur aus der Vielzahl von Strukturen,
der sich von einem Flächenbrechwert einer Glasfläche unterscheidet,
- umfassend mindestens eine der (i) einen Struktur, der (ii) Vielzahl von Strukturen und der (iii) selben Struktur aus der Vielzahl von Strukturen,
- außerhalb einer Position oder einer Domäne, die belegt ist von der mindestens einen der (i) einen Struktur, der (ii) Vielzahl von Strukturen und der (iii) selben Struktur aus der Vielzahl von Strukturen, innerhalb mindestens eines der folgenden Bereiche:
A. die Differenz des Flächenbrechwerts liegt innerhalb eines Bereichs von 0,25 dpt bis 50 dpt;
B. die Differenz des Flächenbrechwerts liegt innerhalb eines Bereichs von 1 dpt bis 25 dpt;
C. die Differenz des Flächenbrechwerts liegt innerhalb eines Bereichs von 2 dpt bis 20 dpt;
D. die Differenz des Flächenbrechwerts liegt innerhalb eines Bereichs von 5 dpt bis 12 dpt.

10. Verfahren nach einem der vorhergehenden Ansprüche 6 bis 9, **dadurch gekennzeichnet, dass** die Herstellung den Schritt umfasst von
- Anwenden der bestimmten Laserprozessparameter, wie etwa zum Erzielen einer Sekundärstruktur entlang einer jeweiligen Fläche von mindestens einem von
a. der (i) einen Struktur,
b. jeder Struktur der (ii) Vielzahl von Strukturen,
c. wenn auf Anspruch 7 bis 9 bezogen, der (iii) selben Struktur aus der Vielzahl von Strukturen.

11. Verfahren nach Anspruch 10, **gekennzeichnet durch** die Schritte von
- Bestimmen diskreter z-Positionen entlang einer geraden Linie entlang einer x, y-Richtung von mindestens einer von
∘ der (i) einen Struktur,
∘ jeder Struktur der (ii) Vielzahl von Strukturen und
∘ der (iii) selben Struktur aus der Vielzahl von Strukturen,
die jeweils eine sphärische Zielkrümmung entlang der einen geraden Linie entlang der x, y-Richtung aufweisen,
- Bestimmen aus diesen diskreten z-Positionen einer Steigung an jeder diskreten x, y-Position entlang der einen x, y-Richtung, wobei eine Änderung der Steigung entlang der einen x, y-Richtung von einer linearen Änderung einer Steigung der sphärischen Zielkrümmung abweicht.

12. Verfahren nach einem der vorhergehenden Ansprüche 6 bis 11, **dadurch gekennzeichnet, dass** die Herstellung den Schritt umfasst von
- Aufbringen (a) einer zusätzlichen Beschichtungszusammensetzung oder (b) mehrerer zusätzlicher Beschichtungszusammensetzungen.

13. Verfahren nach Anspruch 12, **dadurch gekennzeichnet, dass** die Herstellung den Schritt umfasst von
- Anwenden der bestimmten Laserprozessparameter, wie etwa zum Erzielen eines Flächenbrechwerts von mindestens einem von
a. der (i) einen Struktur,
b. jeder Struktur der (ii) Vielzahl von Strukturen,
c. der (iii) selben Struktur aus der Vielzahl von Strukturen,
der sich von einem Flächenbrechwert einer Glasfläche unterscheidet,
- umfassend die (i) eine Struktur, die (ii) Vielzahl von Strukturen die (iii) selbe Struktur aus der Vielzahl von Strukturen,
- außerhalb einer Position oder einer Domäne, die belegt ist von der mindestens einen der (i) einen Struktur, der (ii) Vielzahl von Strukturen und der (iii) selben Struktur aus der Vielzahl von Strukturen,
innerhalb mindestens eines der folgenden Bereiche:
A. die Differenz des Flächenbrechwerts liegt innerhalb eines Bereichs von 0,25 dpt bis 25 dpt;
B. die Differenz des Flächenbrechwerts liegt innerhalb eines Bereichs von 1 dpt bis 25 dpt;
C. die Differenz des Flächenbrechwerts liegt innerhalb eines Bereichs von 2 dpt bis 20 dpt;
D. die Differenz des Flächenbrechwerts liegt innerhalb eines Bereichs von 5 dpt bis 12 dpt.

14. Computer, ausgelegt zum Durchführen des Schritts von
- Bestimmen von Laserprozessparametern zum Erzielen (i) einer vordefinierten Struktur oder (ii) einer Vielzahl von vordefinierten Strukturen eines digitalen Zwillings eines beschichteten Glases,
wobei eine Struktur des digitalen Zwillings des beschichteten Brillenglases eine Domäne auf der Glasfläche des digitalen Zwillings des beschichteten Brillenglases ist, wobei die Domäne Teil einer Oberflächenschicht von mehreren Oberflächenschichten ist, die digital zu einer Vorderfläche und/oder einer Rückfläche eines digitalen Zwillings eines Brillenglases hinzugefügt werden, oder
wobei eine Struktur des digitalen Zwillings des beschichteten Brillenglases eine Domäne von einer Glasfläche des digitalen Zwillings des beschichteten Brillenglases ist, wobei die Domäne verursacht wird durch eine Oberflächenschicht oder mehrere Oberflächenschichten, die digital zu einer Vorderfläche und/oder einer Rückfläche eines digitalen Zwillings eines Brillenglases hinzugefügt werden,
wobei ein Brechungsindex eines Materials der Struktur ein einheitlicher Brechungsindex ist,
und mindestens einem, ausgewählt aus der Gruppe, bestehend aus einem Laser, wie definiert in ISO 11145:2018(E), section 3.19.1, einem Lasergerät, wie definiert in ISO 11145:2018(E), section 3.19.6, einer Laserbaugruppe, wie definiert in ISO 11145:2018(E), section 3.19.7, und einer Lasereinheit, wie definiert in ISO 11145:2018(E), section 3.19.8.

15. Computerprogramm, das Anweisungen umfasst, die, wenn das Programm durch einen Computer ausgeführt wird, den Computer veranlassen zum Ausführen des Verfahrens nach einem der Ansprüche 1 bis 4.

16. Computerlesbares Speicherungsmedium, das darauf das Computerprogramm nach Anspruch 15 gespeichert hat.

## Revendications

1. Procédé destiné à concevoir un jumeau numérique d'un verre de lunettes revêtu au moyen d'un ordinateur en vue d'utiliser le jumeau numérique pour fabriquer le verre de lunettes revêtu, ledit jumeau numérique dudit verre de lunettes revêtu comprenant (i) une structure prédéfinie ou (ii) une pluralité de structures prédéfinies,
ledit jumeau numérique dudit verre de lunettes revêtu décrivant le verre de lunettes revêtu consistant en des données lisibles par ordinateur contenant également des instructions de fabrication tenant compte de paramètres de traitement laser pour obtenir (i) ladite structure prédéfinie ou (ii) ladite pluralité de structures prédéfinies, une structure dudit jumeau numérique dudit verre de lunettes revêtu étant un domaine sur une surface de lentille dudit jumeau numérique dudit verre de lunettes revêtu, ledit domaine faisant partie d'une couche de surface parmi plusieurs couches de surface ajoutées numériquement à une surface avant et/ou à une surface arrière d'un jumeau numérique d'un verre de lunettes, ou
une structure dudit jumeau numérique dudit verre de lunettes revêtu étant un domaine d'une surface de lentille dudit jumeau numérique dudit verre de lunettes revêtu, ledit domaine étant créé par une couche de surface ou plusieurs couches de surface ajoutées numériquement à une surface avant et/ou une surface arrière d'un jumeau numérique d'un verre de lunettes,
le procédé comprenant en outre l'étape suivante :
- détermination desdits paramètres de traitement laser sur la base de caractéristiques de durcissement d'une composition de revêtement, un indice de réfraction d'un matériau de la structure étant un indice de réfraction uniforme.

2. Procédé selon la revendication 1, le procédé étant **caractérisé par**
- la détermination desdits paramètres de traitement laser de manière à ce qu'elle englobe au moins un élément parmi
∘ une variation spatiale dans la direction z d'un réglage d'un paramètre de traitement laser ou de plusieurs paramètres de traitement laser,
∘ une variation spatiale dans la direction x,y d'un réglage d'un paramètre de traitement laser ou de plusieurs paramètres de traitement laser,
chacun permettant d'obtenir (i) ladite structure prédéfinie ou (ii) ladite pluralité de structures prédéfinies ou (iii) une même structure prédéfinie parmi ladite pluralité de structures prédéfinies.

3. Procédé selon l'une quelconque des revendications précédentes, le procédé étant **caractérisé par**
- la révision de paramètres de traitement laser par fabrication du verre de lunettes revêtu
∘ pour confirmer lesdits paramètres de traitement laser ou
∘ pour déterminer à nouveau des paramètres de traitement laser sur la base de caractéristiques de durcissement afin d'obtenir (i) ladite structure prédéfinie ou (ii) ladite pluralité de structures prédéfinies ou (iii) ladite même structure prédéfinie parmi ladite pluralité de structures prédéfinies.

4. Procédé selon l'une quelconque des revendications précédentes, le procédé étant **caractérisé par**
- la détermination desdits paramètres de traitement laser de manière à obtenir par paliers
∘ (i) ladite structure prédéfinie, et/ou
∘ (ii) ladite pluralité de structures prédéfinies, et/ou
∘ lorsqu'il est fait référence à la revendication 2 ou la revendication 3, (iii) ladite même structure prédéfinie parmi ladite pluralité de structures prédéfinies.

5. Procédé selon l'une quelconque des revendications précédentes, le procédé comprenant l'étape de fabrication dudit verre de lunettes revêtu sur la base dudit jumeau numérique conçu.

6. Procédé selon la revendication 5, **caractérisé en ce que** la fabrication comprend l'étape suivante :
- durcissement sélectif de la composition de revêtement par application des paramètres de traitement laser déterminés pour obtenir (i) une structure ou (ii) une pluralité de structures correspondant à (i) ladite structure prédéfinie ou (ii) ladite pluralité de structures prédéfinies.

7. Procédé selon la revendication 6, **caractérisé en ce que** la fabrication comprend l'étape suivante :
- application des paramètres de traitement laser déterminés de manière à ce que
∘ la variation spatiale dans la direction z lors du réglage dudit paramètre de traitement laser ou desdits paramètres de traitement laser, et/ou
∘ la variation spatiale dans la direction x,y lors du réglage dudit paramètre de traitement laser ou desdits paramètres de traitement laser
permettent d'obtenir (i) ladite structure ou (ii) ladite pluralité de structures ou (iii) une même structure parmi ladite pluralité de structures.

8. Procédé selon l'une quelconque des revendications 6 et 7 précédentes, **caractérisé en ce que** la fabrication comprend l'étape suivante :
- application des paramètres de traitement laser déterminés de manière à obtenir par paliers
a. (i) ladite structure, et/ou
b. (ii) ladite pluralité de structures, et/ou
c. lorsqu'il est fait référence à la revendication 7, (iii) ladite même structure parmi ladite pluralité de structures.

9. Procédé selon l'une quelconque des revendications 6 à 8 précédentes, **caractérisé en ce que** la fabrication comprend l'étape suivante :
- application des paramètres de traitement laser déterminés de manière à obtenir une puissance de surface de
a. (i) ladite structure, et/ou
b. chaque structure de (ii) ladite pluralité de structures, et/ou
c. lorsqu'il est fait référence à la revendication 7 et à la revendication 8, (iii) ladite même structure parmi ladite pluralité de structures,
qui est différente d'une puissance de surface d'une surface de lentille
- comprenant (i) ladite structure, et/ou (ii) ladite pluralité de structures, et/ou (iii) ladite même structure parmi ladite pluralité de structures,
- en dehors d'une position ou d'un domaine occupés par (i) ladite structure, et/ou (ii) ladite pluralité de structures, et/ou (iii) ladite même structure parmi ladite pluralité de structures,
dans au moins une des plages suivantes :
A. la différence de puissance de surface se situe dans une plage de 0,25 dioptrie à 50 dioptries ;
B. la différence de puissance de surface se situe dans une plage de 1 dioptrie à 25 dioptries ;
C. la différence de puissance de surface se situe dans une plage de 2 dioptries à 20 dioptries ;
D. la différence de puissance de surface se situe dans une plage de 5 dioptries à 12 dioptries.

10. Procédé selon l'une quelconque des revendications 6 à 9 précédentes, **caractérisé en ce que** la fabrication comprend l'étape suivante :
- application des paramètres de traitement laser déterminés de manière à obtenir une structure secondaire le long d'une surface respective de
a. (i) ladite structure, et/ou
b. chaque structure de (ii) ladite pluralité de structures, et/ou
c. lorsqu'il est fait référence aux revendications 7 à 9, (iii) ladite même structure parmi ladite pluralité de structures.

11. Procédé selon la revendication 10, **caractérisé par** les étapes suivantes :
- détermination de positions z discrètes le long d'une ligne droite le long d'une direction x,y de
∘ (i) ladite structure, et/ou
∘ chaque structure de (ii) ladite pluralité de structures, et/ou
∘ (iii) ladite même structure parmi ladite pluralité de structures,
chacune ayant une courbure cible sphérique le long de ladite ligne droite le long de ladite direction x,y,
- détermination, à partir de ces positions z discrètes, d'une pente à chaque position x,y discrète le long de ladite direction x,y, une variation de la pente le long de ladite direction x,y s'écartant d'une variation linéaire d'une pente de ladite courbure sphérique cible.

12. Procédé selon l'une quelconque des revendications 6 à 11 précédentes, **caractérisé en ce que** la fabrication comprend l'étape suivante :
- application (a) d'une composition de revêtement supplémentaire ou (b) de plusieurs compositions de revêtement supplémentaires.

13. Procédé selon la revendication 12, **caractérisé en ce que** la fabrication comprend l'étape suivante :
- application des paramètres de traitement laser déterminés de manière à obtenir une puissance de surface de
a. (i) ladite structure, et/ou
b. chaque structure de (ii) ladite pluralité de structures, et/ou
c. (iii) ladite même structure parmi ladite pluralité de structures,
qui est différente d'une puissance de surface d'une surface de lentille
- comprenant (i) ladite structure, (ii) ladite pluralité de structures, (iii) ladite même structure parmi ladite pluralité de structures,
- en dehors d'une position ou d'un domaine occupés par (i) ladite structure, et/ou (ii) ladite pluralité de structures, et/ou (iii) ladite même structure parmi ladite pluralité de structures,
dans au moins une des plages suivantes :
A. la différence de puissance de surface se situe dans une plage de 0,25 dioptrie à 25 dioptries ;
B. la différence de puissance de surface se situe dans une plage de 1 dioptrie à 25 dioptries ;
C. la différence de puissance de surface se situe dans une plage de 2 dioptries à 20 dioptries ;
D. la différence de puissance de surface se situe dans une plage de 5 dioptries à 12 dioptries.

14. Ordinateur conçu pour effectuer l'étape suivante :
- détermination de paramètres de traitement laser pour obtenir (i) une structure prédéfinie ou (ii) une pluralité de structures prédéfinies d'un jumeau numérique d'une lentille revêtue,
une structure dudit jumeau numérique dudit verre de lunettes revêtu étant un domaine d'une surface de lentille dudit jumeau numérique dudit verre de lunettes revêtu, ledit domaine faisant partie d'une couche de surface ou de plusieurs couches de surface ajoutées numériquement à une surface avant et/ou une surface arrière d'un jumeau numérique d'un verre de lunettes, ou une structure dudit jumeau numérique dudit verre de lunettes revêtu étant un domaine d'une surface de lentille dudit jumeau numérique dudit verre de lunettes revêtu, ledit domaine étant créé par une couche de surface ou plusieurs couches de surface ajoutées numériquement à une surface avant et/ou une surface arrière d'un jumeau numérique d'un verre de lunettes, un indice de réfraction d'un matériau de la structure étant un indice de réfraction uniforme,
et au moins un élément choisi dans le groupe constitué par un laser tel que défini dans la norme ISO 11145:2018(E), section 3.19.1, un dispositif laser tel que défini dans la norme ISO 11145:2018(E), section 3.19.6, un ensemble laser tel que défini dans la norme ISO 11145:2018(E), section 3.19.7, et une unité laser telle que définie dans la norme ISO 11145:2018(E), section 3.19.8.

15. Programme informatique comprenant des instructions qui, lors de l'exécution du programme par un ordinateur, amènent l'ordinateur à réaliser le procédé de l'une quelconque des revendications 1 à 4.

16. Support de stockage lisible par ordinateur sur lequel est stocké le programme informatique de la revendication 15.
